(19) Europäisches Patentamt
European Patent Office
Office européen des brevets

(11) **EP 4 387 233 A1**

(12) **EUROPEAN PATENT APPLICATION**
published in accordance with Art. 153(4) EPC

(43) Date of publication:
**19.06.2024 Bulletin 2024/25**

(51) International Patent Classification (IPC):
**H04N 19/85** (2014.01)   **G06T 7/00** (2017.01)
**G06N 3/08** (2023.01)

(21) Application number: **21958999.1**

(52) Cooperative Patent Classification (CPC):
**G06N 3/08; G06T 7/00; H04N 19/85**

(22) Date of filing: **30.09.2021**

(86) International application number:
**PCT/CN2021/122473**

(87) International publication number:
**WO 2023/050433 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(72) Inventors:
• YU, Lu
  Dongguan, Guangdong 523860 (CN)
• JIA, Ke
  Dongguan, Guangdong 523860 (CN)
• HE, Qiqi
  Dongguan, Guangdong 523860 (CN)
• WANG, Dong
  Dongguan, Guangdong 523860 (CN)

(71) Applicants:
• **Zhejiang University**
  **Hangzhou, Zhejiang 310058 (CN)**
• **GUANGDONG OPPO MOBILE
  TELECOMMUNICATIONS
  CORP., LTD.
  Dongguan, Guangdong 523860 (CN)**

(74) Representative: **Taor, Simon Edward William et al**
**Venner Shipley LLP
200 Aldersgate
London EC1A 4HD (GB)**

(54) **VIDEO ENCODING AND DECODING METHOD, ENCODER, DECODER AND STORAGE MEDIUM**

(57) The present application provides a video encoding and decoding method, an encoder, a decoder, and a storage medium. The video encoding method comprises: inputting a feature code stream of a current image into a decoding network to obtain first feature information outputted by an ith intermediate layer of the decoding network, i being a positive integer; and inputting the first feature information into a jth intermediate layer of a task analysis network to obtain a task analysis result outputted by the task analysis network, j being a positive integer. In the present application, the feature information outputted by the intermediate layer of the decoding network is inputted into the task analysis network, so that the task analysis network performs task analysis on the basis of the feature information outputted by the decoding network, which saves time and computing resources occupied by task analysis and improves the efficiency of task analysis.

A feature bitstream of a current picture is inputted into a decoding network, and first feature information outputted by an i-th middle layer of the decoding network is obtained ⟶ S701

The first feature information is inputted into a j-th middle layer of a task analysis network, and a task analysis result outputted by the task analysis network is obtained ⟶ S702

**FIG. 7**

EP 4 387 233 A1

**Description**

TECHNICAL FIELD

The present disclosure relates to the technical field of video encoding and decoding, and in particular to a method of video encoding and decoding, an encoder, a decoder and a storage medium.

BACKGROUND

A digital video technology may be integrated into a variety of video devices, such as digital television, smart phones, computers, e-readers or video players. With the development of video technology, video data includes a larger amount of data. In order to facilitate the transmission of video data, the video devices execute video compression technology to enable the video data to be transmitted or stored more effectively.

With the rapid development of a visual analysis technology, a machine vision-oriented video encoding framework is proposed by combining a neural network technology with a picture and video compression technology.

However, at present, a compression-before-analysis model based on a neural network has a large amount of calculation and takes a long time.

SUMMARY

Embodiments of the present disclosure provide a method of video encoding and decoding, an encoder, a decoder and a storage medium, so as to save the time and amount of calculation in task analysis and further improve the efficiency of task analysis.

In a first aspect of the present disclosure, there is provided a method of video encoding, which includes the following operations.

A feature bitstream of a current picture is inputted into a decoding network and first feature information outputted by an i-th middle layer of the decoding network is obtained, where i is a positive integer; and

the first feature information is inputted into a j-th middle layer of a task analysis network and a task analysis result outputted by the task analysis network is obtained, where j is a positive integer.

In a second aspect of the present disclosure, there is provided a method of video decoding, which includes the following operations.

A current picture to be encoded is acquired; and

the current picture is inputted into an encoding network and a feature bitstream outputted by the encoding network is obtained.

Herein, the encoding network and a decoding network are end-to-end trained together during model training, and first feature information outputted by an i-th middle layer of the decoding network is inputted into a j-th middle layer of a task analysis network.

In a third aspect of the present disclosure, there is provided a video encoder, configured to implement the method in the above first aspect or any implementations thereof. Specifically, the encoder includes functional modules configured to implement the method in the above first aspect or any implementations thereof.

In a fourth aspect of the present disclosure, there is provided a video decoder, configured to implement the method in the above second aspect or any implementations thereof. Specifically, the decoder includes functional modules configured to implement the method in the above second aspect or any implementations thereof.

In a fifth aspect of the present disclosure, there is provided a video encoder, including a processor and a memory. The memory is configured to store a computer program, and the processor is configured to call and execute the computer program stored in the memory to implement the method of the above first aspect or any implementations thereof.

In a sixth aspect of the present disclosure, there is provided a video decoder, including a processor and a memory. The memory is configured to store a computer program, and the processor is configured to call and execute the computer program stored in the memory to implement the method of the above second aspect or any implementations thereof.

In a seventh aspect of the present disclosure, there is provided a video encoding and decoding system, including a video decoder and a video encoder. The video encoder is configured to perform the method in the first aspect or any implementations thereof, and video decoder is configured to perform the method in the above second aspect or any implementations thereof.

In an eighth aspect of the present disclosure, there is provided a chip, configured to implement the method in any of the first aspect to second aspect or any implementations thereof. Specifically, the chip includes a processor, which is configured to call and execute a computer program from a memory to cause a device equipped with the chip to implement the method in any of the above first aspect to second aspect or any implementations thereof.

In a ninth aspect of the present disclosure, there is provided a computer-readable storage medium, configured to store a computer program that causes a computer to implement the method in any of the above first aspect to second aspect or any implementations thereof.

In a tenth aspect of the present disclosure, there is provided a computer program product, including computer program instructions that cause a computer to implement the method in any of the above first aspect to second aspect or any implementations thereof.

In an eleventh aspect of the present disclosure, there is provided a computer program that, when running on a computer, causes the computer to implement the method in any of the above first aspect to second aspect or any implementations thereof.

In a twelfth aspect of the present disclosure, there is provided a bitstream, the bitstream being generated by the method of the above second aspect.

Based on the above technical solution, a feature bitstream of a current picture is inputted into a decoding network to obtain first feature information outputted by an i-th middle layer of the decoding network, where i is a positive integer; and the first feature information is inputted into a j-th middle layer of a task analysis network to obtain a task analysis result outputted by the task analysis network, where j is a positive integer. In the present disclosure, the feature information outputted from a middle layer of the decoding network is inputted into the task analysis network, so that the task analysis network performs task analysis based on feature information outputted by the decoding network, which saves time and computing resources occupied by task analysis, thereby improving the efficiency of task analysis.

BRIEF DESCRIPTION OF THE DRAWINGS

FIG. 1 is a schematic block diagram of a video encoding and decoding system according to an embodiment of the present disclosure.

FIG. 2 is a flow diagram of compression before analysis for a picture.

FIG. 3 is a schematic block diagram of a video encoder according to an embodiment of the present disclosure.

FIG. 4 is a schematic block diagram of a video decoder according to an embodiment of the present disclosure.

FIG. 5A is a flow diagram of an end-to-end encoding and decoding network.

FIG. 5B is a schematic diagram of a partition of a Cheng encoding and decoding network.

FIG. 5C is a schematic diagram of a partition of a Lee encoding and decoding network.

FIG. 5D is a schematic diagram of a partition of a Hu encoding and decoding network.

FIG. 6A is a flow diagram of a task analysis network.

FIG. 6B is a schematic diagram of a partition of a target recognition network.

FIG. 6C is a schematic diagram of a partition of a target detection network.

FIG. 7 is a schematic flowchart of a method of video decoding provided by an embodiment of the present disclosure.

FIG. 8A is a schematic diagram of a network model according to an embodiment of the present disclosure.

FIG. 8B is a schematic diagram of a decoding network according to an embodiment of the present disclosure.

FIG. 8C is a schematic diagram of another decoding network according to an embodiment of the present disclosure.

FIG. 8D is a schematic diagram of yet another decoding network according to an embodiment of the present disclosure.

FIG. 9A is a schematic diagram of a target detection network according to an embodiment of the present disclosure.

FIG. 9B is a schematic diagram of a portion of the network in FIG. 9A.

FIG. 9C is a schematic network diagram of partial components in a Cheng2020 network.

FIG. 9D is a schematic network diagram of an end-to-end encoding and decoding network and a task analysis network.

FIG. 9E is a schematic diagram of a connection between an end-to-end encoding and decoding network and a task analysis network.

FIG. 9F is a schematic diagram of another connection between an end-to-end encoding and decoding network and a task analysis network.

FIG. 9G is a schematic diagram of yet another connection between an end-to-end encoding and decoding network and a task analysis network.

FIG. 9H is a schematic diagram of another model according to an embodiment of the present disclosure.

FIG. 10A is a schematic diagram of a connection between an end-to-end encoding and decoding network and a task analysis network.

FIG. 10B is a schematic diagram of another connection between an end-to-end encoding and decoding network and a task analysis network.

FIG. 10C is a schematic diagram of yet another connection between an end-to-end encoding and decoding network and a task analysis network.

FIG. 11 is a schematic flowchart of a method of video decoding provided by an embodiment of the present disclosure.

FIG. 12 is a schematic structural diagram of a decoding network and a task analysis network according to an embodiment of the present disclosure.

FIG. 13 is a schematic flowchart of a method of video encoding provided by an embodiment of the present disclosure.

FIG. 14A is a schematic diagram of a structure of an encoding network according to the present disclosure.

FIG. 14B is a schematic diagram of another structure of an encoding network according to the present disclosure.

FIG. 14C is a schematic diagram of yet another structure of an encoding network according to the present disclosure.

FIG. 14D is a schematic diagram of a model of an encoding network according to the present disclosure.

FIG. 14E is a schematic network diagram of an attention model in an encoding network.

FIG. 15 is a schematic diagram of a general end-to-end encoding and decoding network.

FIG. 16 is a schematic block diagram of a video decoder provided by an embodiment of the present disclosure.

FIG. 17 is a schematic block diagram of a video encoder provided by an embodiment of the present disclosure.

FIG. 18 is a schematic block diagram of an electronic device provided by an embodiment of the present disclosure.

FIG. 19 is a schematic block diagram of a video encoding and decoding system provided by an embodiment of the present disclosure.

## DETAILED DESCRIPTION

The present disclosure may be applied to various machine vision-oriented and human-machine hybrid vision-oriented video encoding and decoding fields, and combines technologies such as a fifth-generation (5G), an artificial intelligence (AI), a deep learning, a feature extraction and video analysis with existing video processing and encoding technologies. The 5G era has spawned a large number of machine-oriented applications, such as Internet of Vehicles, autonomous driving, an industrial Internet, smart and safe cities, wearable devices, a video surveillance and other machine vision content, which has more extensive application scenarios compared with the increasingly saturated human-oriented video. The video encoding for machine vision will become one of the main incremental traffic sources in the 5G and post-5G era.

For example, the solution of the present disclosure may be integrated into an audio video coding standard (AVS), such as a H.264/audio video coding (AVC) standard, a H.265/high efficiency video encoding (HEVC) standard, and a H.266/versatile video encoding (VVC) standard. Optionally, the solutions of the present disclosure may be integrated into other proprietary or industry standards for operation, the standards including ITU-TH.261, ISO/IECMPEG-1Visual, ITU-TH.262 or ISO/IECMPEG-2Visual, ITU-TH.263, ISO/IECMPEG-4Visual and ITU-TH.264. ITU-TH.264 (also referred to as ISO/IECMPEG-4AVC) includes scalable video codec (SVC) and multi-view video codec (MVC) extensions. It should be understood that the techniques of the present disclosure are not limited to any particular encoding and decoding standards or techniques.

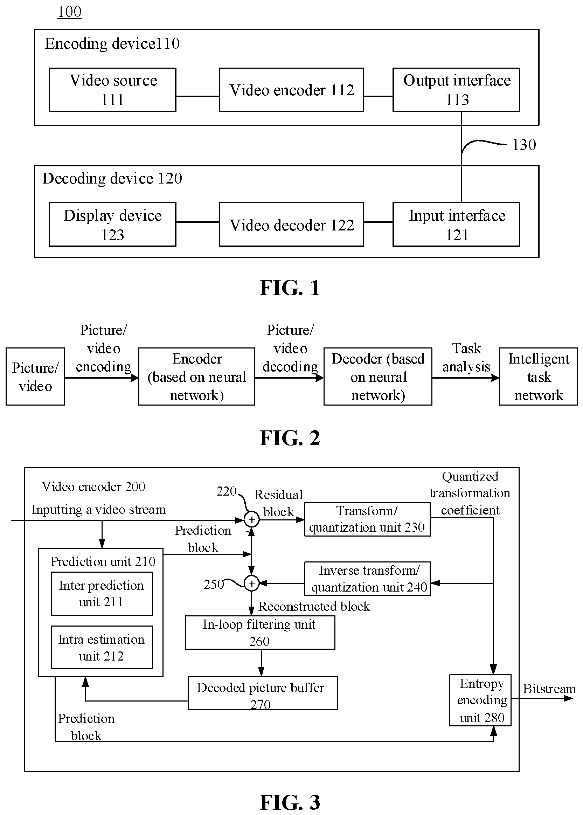

FIG. 1 is a schematic block diagram of a video encoding and decoding system according to an embodiment of the present disclosure. It should be noted that FIG. 1 is only an example and the video encoding and decoding system of the embodiments of the present disclosure includes, but is not limited to, FIG. 1. As illustrated in FIG. 1, the video encoding and decoding system 100 includes an encoding device 110 and a decoding device 120. The encoding device is used to encode (which may be understood as compression) video data to generate a bitstream, and transmit the bitstream to the decoding device. The decoding device decodes the bitstream generated by the encoding device, and obtains decoded video data.

The encoding device 110 in the embodiments of the present disclosure may be understood as a device having a function of video encoding, and the decoding device 120 may be understood as a device having a function of video decoding. That is, the encoding device 110 and the decoding device 120 in the embodiments of the present disclosure include a wider range of devices, including, for example, smart phones, desktop computers, mobile computing devices, notebook (e.g. laptop) computers, tablet computers, set-top boxes, televisions, cameras, display devices, digital media players, video game consoles, in-vehicle computers, and the like.

In some embodiments, the encoding device 110 may transmit encoded video data (e.g. a bitstream) to the decoding device 120 via a channel 130. The channel 130 may include one or more media and/or devices capable of transmitting the encoded video data from the encoding device 110 to the decoding device 120.

In an example, the channel 130 includes one or more communication media that enables the encoding device 110 to directly transmit the encoded video data to the decoding device 120 in real time. In this example, the encoding device 110 may modulate the encoded video data according to a communication standard and transmit modulated video data to the decoding device 120. The communication media includes a wireless communication media, such as a radio frequency spectrum, and optionally, the communication media may also include a wired communication media, such as one or more physical transmission lines.

In another example, the channel 130 includes a storage medium that may store the encoded video data from the encoding device 110. The storage medium includes a variety of local access data storage medium, such as optical discs, DVDs, flash memories, etc. In this example, the decoding device 120 may acquire the encoded video data from the storage medium.

In another example, the channel 130 may include a storage server that may store the encoded video data from the encoding device 110. In this example, the decoding device 120 may download stored encoded video data from the storage server. Optionally, the storage server may store the encoded video data and may transmit the encoded video data to the decoding device 120, such as a web server (e.g. for a website), a File Transfer Protocol (FTP) server, etc.

In some embodiments, the encoding device 110 includes a video encoder 112 and an output interface 113. The output interface 113 may include a modulator/demodulator (or a modem) and/or a transmitter.

In some embodiments, the encoding device 110 may further include a video source 111 in addition to the video encoder 112 and the input interface 113.

The video source 111 may include at least one of a video capture device (e.g. a video camera), a video archive, a video input interface, or a computer graphics system. The video input interface is used for receiving video data from a video content provider, and the computer graphics system is used for generating video data.

The video encoder 112 encodes video data from the video source 111 to generate a bitstream. The video data may include one or more pictures or sequence of pictures. The bitstream contains encoded information of the picture(s) or the sequence of pictures in the form of bitstream. The encoded information may include encoded picture data and associated data. The associated data may include a sequence parameter set (SPS), a picture parameter set (PPS), and other syntax structures. The SPS may contain parameters applied to one or more sequences. The PPS may contain parameters applied to one or more pictures. The syntax structure refers to a collection of zero or more syntax element arranged in a specified order in the bitstream.

The video encoder 112 transmits the encoded video data to the decoding device 120 directly via the output interface 113. The encoded video data may also be stored on a storage medium or a storage server for subsequent reading by the decoding device 120.

In some embodiments, the decoding device 120 includes an input interface 121 and a video decoder 122.

In some embodiments, the decoding device 120 may further include a display device 123 in addition to the input interface 121 and the video decoder 122.

The input interface 121 includes a receiver and/or a modem. The input interface 121 may receive the encoded video data through the channel 130.

The video decoder 122 decodes the encoded video data, obtains decoded video data, and transmits the decoded video data to the display device 123.

The display device 123 displays the decoded video data. The display device 123 may be integrated with the decoding device 120 or external to the decoding device 120. The display device 123 may include a variety of display devices, such as a liquid crystal display (LCD), a plasma display, an organic light emitting diode (OLED) display or other types of display devices.

In addition, FIG. 1 is only an example, and the technical solution of the embodiments of the present disclosure is not limited to FIG. 1. For example, the technology of the present disclosure may also be applied to a single-side video encoding or single-side video decoding.

A neural network originates from a cross study of cognitive neuroscience and mathematics. A multi-layer perceptron (MLP) structure constructed by multi-layer alternating cascade neurons and nonlinear activation function may realize approximation to any continuous function with small enough error. A learning method of the neural network has gone through a perceptron learning algorithm proposed in 1960s, an MLP learning process established by a chain rule and back propagation algorithm in 1980s, and then a random gradient descent method widely used today. In order to solve problems of high complexity and signal dependence in time domain signal gradient calculation, a long short-term memory (LSTM) structure is proposed, which realizes efficient learning of sequence signals by controlling the gradient transfer using a cyclic network structure. Through a layered pre-training for each layer of a restricted Boltzmann machine (RBM), the training of a deep neural network becomes possible. While explaining that MLP structure has better feature learning ability, a training complexity of MLP can be effectively alleviated by layer-by-layer initialization and pre-training. Since then, the research on MLP structure with multiple hidden layers has become a hot topic again, and the neural network has a new name, i.e., deep learning (DL).

As an optimization algorithm and signal compact representation, the neural network may be combined with a picture and video compression.

With the development and popularization of machine learning algorithms, the end-to-end picture/video encoder and decoder based on the deep learning has achieved better performance than a traditional encoder and decoder by using tools of deep neural network assisted decoder and by taking advantage of a hierarchical model architecture and large-scale data prior information in deep learning methods.

The encoder and decoder for picture compression and an intelligent task network for task analysis are designed and optimized separately, the process of which is illustrated in FIG. 2. When performing intelligent task analysis on a compressed picture, it is necessary to input the picture decoded and reconstructed by different encoders and decoders into the intelligent task network for task analysis.

Framework methods of encoding and decoding for compression may usually include: a traditional hybrid encoding framework, an improvement of the traditional hybrid encoding framework (for example, using a neural network to replace some modules in the traditional framework), and an end-to-end encoding and decoding network framework. Outputs of output ends in these compression methods are decoded and reconstructed pictures or videos.

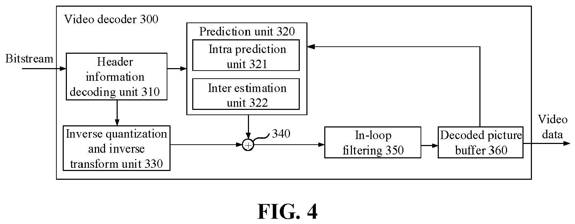

In some embodiments, when the encoding and decoding framework for compression is the traditional hybrid encoding framework, a video encoder as illustrated in FIG. 3 and a video decoder as illustrated in FIG. 4 may be used.

FIG. 3 is a schematic block diagram of a video encoder according to an embodiment of the present disclosure. It should be understood that the video encoder 200 may be used for lossy compression of pictures or lossless compression of pictures. The lossless compression may be visually lossless compression or mathematically lossless compression.

In some embodiments, as illustrated in FIG. 3, the video encoder 200 may include a prediction unit 210, a residual unit 220, a transform/quantization unit 230, an inverse transform/quantization unit 240, a reconstruction unit 250, an in-loop filtering unit 260, a decoded picture buffer 270, and an entropy encoding unit 280. It should be noted that the video encoder 200 may include more, fewer or different functional components.

Optionally, in the present disclosure, a current block may be referred to as a current coding unit (CU) or a current prediction unit (PU) etc. A prediction block may also be called a prediction picture block or a picture prediction block, and a reconstructed picture block may also be called a reconstructed block or a picture reconstructed picture block.

In some embodiments, the prediction unit 210 includes an inter prediction unit 211 and an intra estimation unit 212. Because there is a strong correlation between adjacent pixels in a picture of a video, an intra prediction method is used to eliminate spatial redundancy between adjacent pixels in the video encoding and decoding technology. Because there is a strong similarity between adjacent pictures in a video, an inter prediction method is used to eliminate temporal redundancy between adjacent pictures in the video encoding and decoding technology, thus improving encoding efficiency.

The inter prediction unit 211 may be used for inter prediction. The inter prediction may refer to picture information of different pictures, motion information is used for inter prediction to find a reference block from a reference picture, and generates a prediction block according to the reference block for eliminating temporal redundancy. The pictures used for the inter prediction may be P pictures and/or B pictures, where P pictures refer to forward prediction pictures and B pictures refer to bidirectional prediction pictures. The motion information includes a reference picture list where the reference pictures are located, an index of a reference picture, and a motion vector. The motion vector may be in integer pixel or fractional pixel. If the motion vector is in fractional pixel, it is necessary to use interpolation filtering in the reference picture to make a required fractional-pixel block. Herein, the integer-pixel block or fractional-pixel block found in the reference picture according to the motion vector is called a reference block. In some technologies, the reference block will be regard as a prediction block directly. In some technologies, the prediction block will be generated by processing based on the reference block, which may also be understood as taking the reference block as the prediction block and then processing the prediction block to generate a new prediction block.

The intra estimation unit 212 predicts pixel information within a current coded picture block by referring only to the information of the same picture for eliminating spatial redundancy. The pictures used by intra prediction may be I pictures.

There are many prediction models in the intra prediction. Taking the international digital video encoding standard H series as an example, H.264/AVC standard has 8 angular prediction modes and 1 non-angular prediction mode, and H.265/HEVC is extended to 33 angular prediction modes and 2 non-angular prediction modes. Intra prediction modes used by HEVC include a Planar mode, a DC mode and 33 angle models, that is, a total of 35 prediction modes. Intra modes used by VVC include the Planar mode, the DC mode and 65 angle modes, that is, a total of 67 prediction modes. For a luma component, there is a Matrix based intra prediction (MIP) prediction model obtained based on training, and for a chroma component, there is a CCLM prediction model.

It should be noted that with the increase of angle mode, intra prediction will be more accurate and more in line with the development of high-definition and ultra-high-definition digital video.

The residual unit 220 may generate a residual block of the CU based on the pixel block of the CU and the prediction block of the PU of the CU. For example, the residual unit 220 may generate the residual block of the CU such that each sample in the residual block has a value equal to a difference between a sample in a pixel block of the CU and a corresponding sample in the prediction block of the PU of the CU.

The transform/quantization unit 230 may quantize a transformation coefficient. The transform/quantization unit 230 may quantize a transformation coefficient associated with a Transform Unit (TU) of the CU based on a quantization parameter (QP) value associated with the CU. The video encoder 200 may adjust a degree of quantization applied to the transformation coefficient associated with the CU by adjusting the QP value associated with the CU.

The inverse transform/quantization unit 240 may apply inverse quantization and inverse transform to the quantized transformation coefficient respectively to reconstruct the residual block according to the quantized transformation coefficient.

The reconstruction unit 250 may add samples of the reconstructed residual block to corresponding samples of one or more prediction blocks generated by the prediction unit 210 to generate a reconstructed picture block associated with the TU. By reconstructing a sample block of each TU of the CU in this manner, the video encoder 200 may reconstruct the pixel block of the CU.

The in-loop filtering unit 260 may perform a deblocking filtering operation to reduce blocking effects of pixel blocks associated with the CU.

In some embodiments, the in-loop filtering unit 260 includes a deblocking filtering unit and a sample adaptive compensation/adaptive in-loop filter (SAO/ALF) unit, where the deblocking filtering unit is used to remove the blocking effects and the SAO/ALF unit is used to remove ringing effects.

The decoded picture buffer 270 may store the reconstructed pixel block. The inter prediction unit 211 may use the reference picture containing the reconstructed pixel block to perform inter prediction for PUs of other pictures. In addition, the intra estimation unit 212 may use the reconstructed pixel block in the decoded picture buffer 270 to perform intra prediction on other PUs in the same picture as the CU.

The entropy encoding unit 280 may receive the quantized transformation coefficient from the transform/quantization unit 230. The entropy encoding unit 280 may perform one or more entropy encoding operations on the quantized transformation coefficient to generate entropy encoded data.

FIG. 4 is a schematic block diagram of a video decoder according to an embodiment of the present disclosure.

As illustrated in FIG. 4, the video decoder 300 includes an entropy decoding unit 310, a prediction unit 320, an inverse quantization and inverse transform unit 330, a reconstruction unit 340, an in-loop filtering unit 350, and a decoded picture buffer 360. It should be noted that the video decoder 300 may include more, fewer or different functional components.

The video decoder 300 may receive a bitstream. The entropy decoding unit 310 may parse the bitstream to extract syntax elements from the bitstream. As a part of parsing the bitstream, the entropy decoding unit 310 may parse entropy-encoded syntactic elements in the bitstream. The prediction unit 320, the inverse quantization and inverse transform unit 330, the reconstruction unit 340, and the in-loop filtering unit 350 may decode the video data according to the syntax elements extracted from the bitstream, that is, decoded video data is generated.

In some embodiments, the prediction unit 320 includes an intra estimation unit 321 and an inter prediction unit 322.

The intra estimation unit 321 (also referred to as an intra prediction unit) may perform intra prediction to generate a prediction block of a PU. The intra estimation unit 321 may use an intra prediction mode to generate the prediction block of the PU based on pixel blocks of adjacent PUs spatially. The intra estimation unit 321 may also determine the intra prediction mode of the PU based on one or more syntactic elements parsed from the bitstream.

The inter prediction unit 322 may construct a first reference picture list (list 0) and a second reference picture list (list 1) based on the syntactic elements parsed from the bitstream. In addition, if the PU uses inter prediction encoding, the entropy decoding unit 310 may parse motion information of the PU. The inter prediction unit 322 may determine one or more reference blocks of the PU based on the motion information of the PU. The inter prediction unit 322 may generate the prediction block of the PU based on one or more reference blocks of the PU.

The inverse quantization and inverse transform unit 330 (also known as an inverse quantization/transform unit) may inverse-quantize (i.e., de-quantize) a transformation coefficient associated with a TU. The inverse quantization and inverse transform unit 330 may use the QP value associated with the CU of the TU to determine the degree of quantization.

After inverse-quantizing the transformation coefficient, the inverse quantization and inverse transform unit 330 may apply one or more inverse transformation to the inverse quantized transformation coefficient to generate a residual block associated with the TU.

The reconstruction unit 340 uses the residual block associated with the TU of the CU and the prediction block of the PU of the CU to reconstruct the pixel block of the CU. For example, the reconstruction unit 340 may add the samples of the residual block to the corresponding samples of the prediction block to reconstruct the pixel block of the CU and obtain a reconstructed picture block.

The in-loop filtering unit 350 may perform a deblocking filtering operation to reduce blocking effects of pixel blocks associated with the CU.

The video decoder 300 may store the reconstructed picture of the CU in the decoded picture buffer 360. The video decoder 300 may use the reconstructed picture in the decoded picture buffer 360 as a reference picture for subsequent prediction or transmit the reconstructed picture to the display device for presentation.

As can be seen from the above FIG. 3 and FIG. 4, the basic process of video encoding and decoding is as follows. At the encoder side, a picture is divided into blocks. For a current block, the prediction unit 210 generates a prediction block of the current block using the intra prediction or the inter prediction. The residual unit 220 may calculate a residual block based on the prediction block and an original block of the current block. For example, the prediction block is subtracted from the original block of the current block to obtain the residual block, which may also be called residual information. Information that is insensitive to human eyes may be removed from the residual block through the process of transform and quantization by the transform/quantization unit 230 to eliminate visual redundancy. Optionally, a residual block before the transform and quantization by the transform/quantization unit 230 may be called a time domain residual block, and the time domain residual after the transform and quantization by the transform/quantization unit 230 may be called a frequency residual block or a frequency domain residual block. The entropy encoding unit 280 has received a quantized transformation coefficient outputted by the transform/quantization unit 230, and may perform entropy encoding on the quantized transformation coefficient, and output the bitstream. For example, the entropy encoding unit 280 may eliminate character redundancy based on a target context model and probability information of the binary bitstream.

At the decoding end, the entropy decoding unit 310 may parse the bitstream to obtain prediction information and a quantization coefficient matrix of the current block, and the prediction unit 320 generates the prediction block of the current block using intra prediction or inter prediction based on the prediction information. The inverse quantization and inverse transform unit 330 uses the quantization coefficient matrix obtained from the bitstream to perform inverse quantization and inverse transform on the quantization coefficient matrix to obtain the residual block. The reconstruction unit 340 adds the prediction block and the residual block to obtain a reconstructed block. A reconstructed picture is composed of reconstructed blocks. The in-loop filtering unit 350 performs picture-based or block-based in-loop filtering on the reconstructed picture to obtain a decoded picture. The encoding end also needs to perform similar operations to the decoding end to obtain the decoded picture. The decoded picture may also be called the reconstructed picture, and the reconstructed picture may serve as a reference picture of inter prediction for subsequent pictures.

It should be noted that block partitioning information, as well as mode information or parameter information for prediction, transformation, quantization, entropy encoding, in-loop filtering and the like which are determined by the encoder are carried in the bitstream, when necessary. The decoder determines the same block partitioning information, and mode information or parameter information for prediction, transformation, quantization, entropy encoding, in-loop filtering and the like as the encoding end through parsing bitstream and performing analysis according to existing information, so as to ensure that the decoded picture obtained by the encoding end and the decoded picture obtained by the decoding end are the same.

The above is the basic process of video encoder and decoder under the block-based hybrid encoding framework. With the development of technology, some modules or steps of the framework or process may be optimized. The present disclosure is applicable to the basic process of video encoder and decoder under the block-based hybrid encoding framework, but is not limited to the framework and process.

In some embodiments, if the encoding and decoding framework used for compression is an improvement of the traditional hybrid encoding framework, the traditional hybrid encoding framework may be improved by methods illustrated in the following examples.

In example 1, a fractional pixel interpolation filter based on a Super Resolution Convolution neural network (SRCNN) is used for a semi-pixel motion compensation of HEVC.

In example 2, a new Intra Prediction using Full connected Network (IPFCN) is used for intra prediction of HEVC, and a reference pixel for intra prediction is expanded and taken as an input of a vector, so as to predict a pixel value of the current block.

In example 3, a convolution neural network is used for acceleration of the intra coding, and a method of classifying CUs with different depths by the network is used for predicting a CU segmentation method for intra coding, so as to replace a manner of traversing different partitions in traditional HEVC rate-distortion optimization method.

In some embodiments, the encoding and decoding framework for compression may be an end-to-end encoding and decoding network framework.

The traditional hybrid encoding and decoding framework or the improved method based on the traditional hybrid encoding are all used for encoding and decoding according to multiple modules, and each of the modules depends on the optimization of different models in the modules mainly to obtain an optimal rate-distortion solution. This method does not consider a linkage between modules, which often leads to a local optimal solution of rate-distortion optimization. In recent years, the development and wide use of an end-to-end compression network largely alleviates the disadvantages of this optimization method according to modules. The rate-distortion optimization is realized by training the transmission of a network, and the rate-distortion loss of the whole model is calculated more explicitly.

In an example, the end-to-end encoding and decoding network is an encoding and decoding network based on a Recurrent Neural Network (RNN). In this method, a picture is inputted into an RNN which are shared by multiple recursions, and a reconstructed residual outputted in each recursion is taken as an input of the RNN at the next recursion. The code rate is controlled by controlling the number of recursions, thus obtaining the effect of scalable coding.

In some embodiments, the end-to-end encoding and decoding network is an end-to-end picture encoding network based on a Convolution Neural Network (CNN). A generalized division normalized activation function is used in the network, and a uniform quantization is used for the coefficients of a transform function outputted by the network. The quantization process is simulated by adding uniform noise during training, thus solving the problem of non-differentiable quantization in the network training. Optionally, a Gaussian Scale Mixture (GSM) hyperprior model may be used to replace a complete decomposition model for modeling.

In some embodiments, a Gaussian Mixture Model (GMM) hyperprior model may be used to replace GSM, and an autoregressive contextual conditional probability model based on a PixelCNN structure is used to reduce the bit rate and improve accuracy of modeling.

In some embodiments, the end-to-end encoding and decoding network is a Lee encoding and decoding network, and the Lee encoding and decoding network adopts a transfer learning method to improve the quality of reconstructed picture of the network.

In some embodiments, the end-to-end encoding and decoding network is a Hu encoding and decoding network, and the Hu encoding and decoding network constructs compact and expressive representations at low bit rates successfully by taking advantage of the transferability across different tasks to support a set of diverse machine vision tasks including high-level semantic related tasks and middle-level geometric parsing tasks. The encoding and decoding network enhances low-level visual features by using high-level semantic maps, and it is verified that this method can improve the code rate, precision, and distortion performance of picture compression effectively.

In an intelligent analysis-oriented application scenario, the video and picture not only need to be presented to users for high-quality viewing, but also are used to analyze and understand semantic information therein.

An intelligent task network of the embodiments of the present disclosure includes, but is not limited to, a target recognition network, a target detection network, an instance segmentation network and the like.

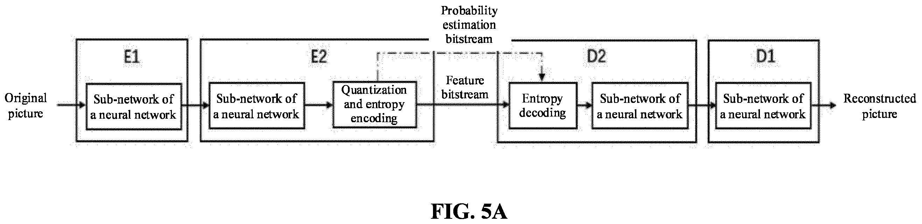

In some embodiments, an end-to-end encoding and decoding network first uses a neural network to compress picture/video typically, then transmits a compressed bitstream to a decoder, and finally decodes and reconstructs the picture/video at the decoding end. Optionally, FIG. 5A illustrates a flow diagram of an end-to-end encoding and decoding network, where modules E1 and E2 constitute the encoding end of the end-to-end encoding and decoding network, and modules D2 and D1 constitute the decoding end of the end-to-end encoding and decoding network. The module E1 is a feature extraction network, which extracts features from the picture. The module E2 is a feature encoding module, which continues to extract features and encodes the extracted features into a bitstream. The module D2 is a feature decoding module, which decodes and restores the bitstream to features and reconstructs them to low-level features. The module D1 is a decoding network, which reconstructs the picture according to the features reconstructed by D2.

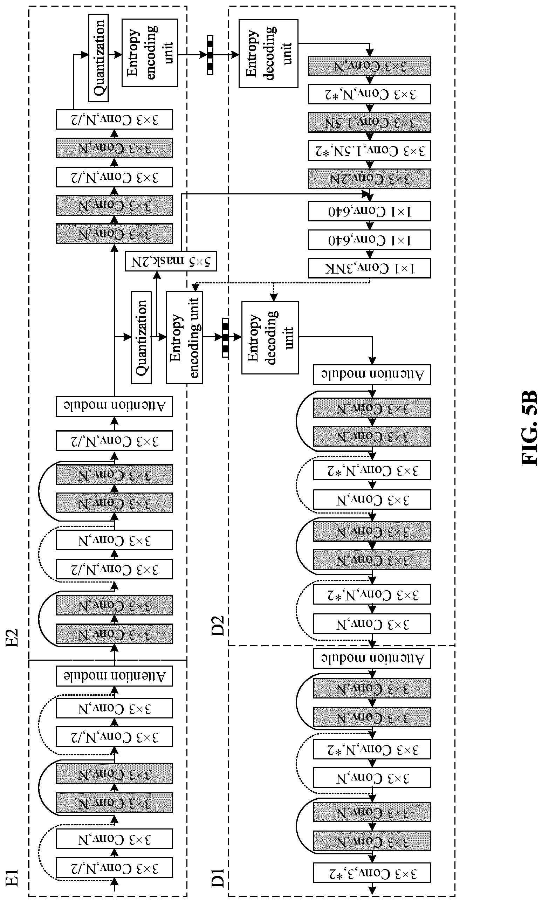

Exemplarily, if the above end-to-end encoding and decoding network is a Cheng encoding and decoding network as illustrated in FIG. 5B, a partitioning mode of the module E1, module E2, module D1 and module D2 is as illustrated in dashed boxes in FIG. 5B. Conv in FIG. 5B is an abbreviation of convolution and represents a convolution layer.

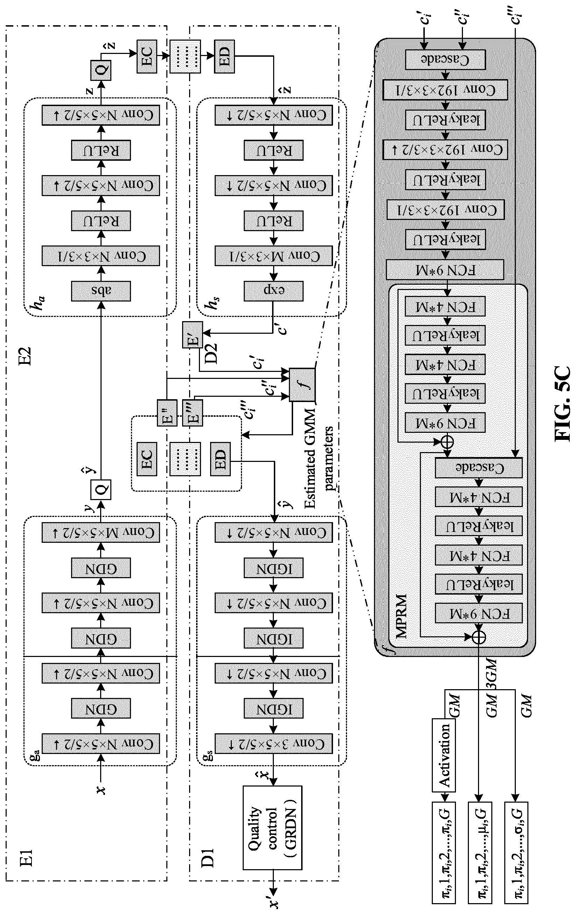

Exemplarily, if the above end-to-end encoding and decoding network is a Lee encoding and decoding network as illustrated in FIG. 5C, a partitioning mode of the module E1, module E2, module D1 and module D2 is as illustrated in dashed boxes in FIG. 5C. In FIG. 5C, a fully conventional networks (FCN) represents a full connection layer, a Rectified Linear Unit (ReLU) is an activation function, a leaky ReLU is a leaky activation function, abs represents calculating an absolute value, and exp represents an exponential function of e.

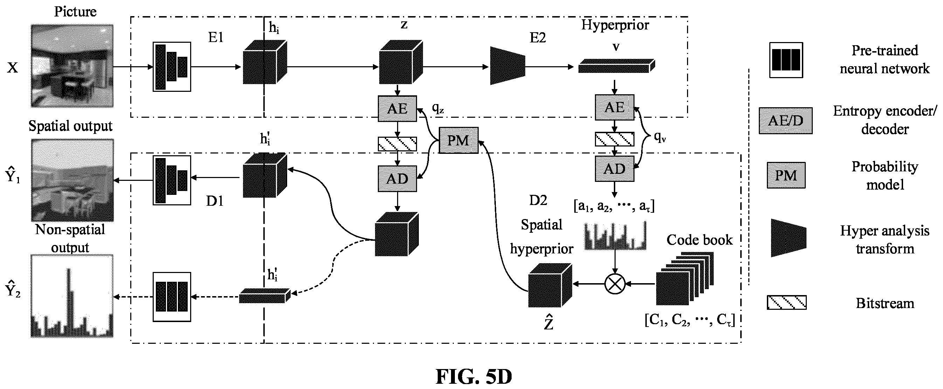

Exemplarily, if the above end-to-end encoding and decoding network is a Hu encoding and decoding network as illustrated in FIG. 5D, a partitioning mode of the module E1, module E2, module D1 and module D2 is as illustrated in dashed boxes in FIG. 5D.

It should be noted that the partitioning mode of the above modules is only an example, and flexible partitioning may be performed according to the actual situation.

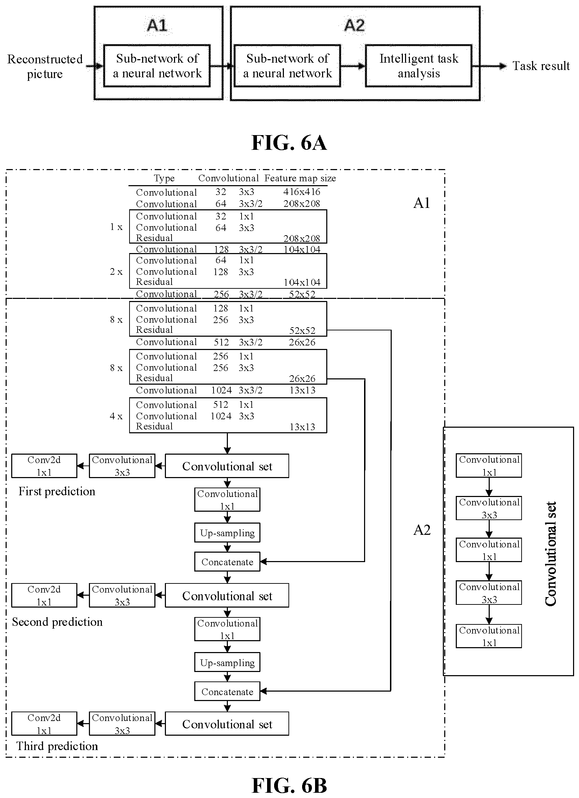

In some embodiments, the intelligent task network performs intelligent task analysis on the input picture/video content, including, but being not limited to, tasks such as target recognition, instance segmentation, etc. Optionally, FIG. 6A illustrates a flow diagram of an intelligent task network, where the module A1 is a feature extraction network for extracting low-level features from the reconstructed picture/video. The module A2 is an intelligent analysis network, which continues to extract features and intelligently analyze the extracted features.

Exemplarily, if the above intelligent task network is a target recognition network yolo_v3 (you only look once_version 3) as illustrated in FIG. 6B, a partitioning mode of the module A1 and module A2 is as illustrated in dashed boxes in FIG. 6B.

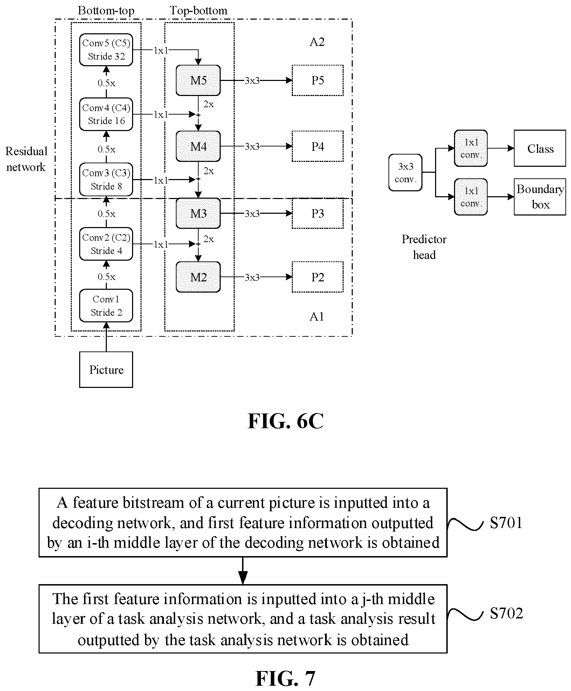

As an example, if the above intelligent task network is a target detection network, i.e., residual Networks-Feature Pyramid Networks (ResNet-FPN) as illustrated in FIG. 6C, a partitioning mode of the module A1 and the module A2 is as illustrated in dashed boxes in FIG. 6C.

As an example, optionally, the intelligent task network described above may also be an instance segmentation network Mask Region-CNN (Mask RCNN).

At present, when facing a large number of data and intelligent analysis tasks, for the method in which compression and storage is first performed on a picture and then decompression and analysis are performed on the stored picture, the task analysis is based on the picture. That is, the decoding network reconstructs the picture, and the reconstructed picture is inputted into the task analysis network for task analysis, resulting in a long time, large amount of calculation and low efficiency of task analysis.

In order to solve the above technical problems, in the present disclosure, feature information outputted by a middle layer of a decoding network is inputted into the task analysis network, so that the task analysis network performs task analysis based on the feature information outputted by the decoding network, which saves time and computing resources occupied by task analysis, thereby improving the efficiency of task analysis.

The method of video decoding according to embodiments of the present disclosure is described in detail below in conjunction with specific examples.

Firstly, taking a decoding end as an example, the decoding process for a picture is introduced.

FIG. 7 is a flowchart of a method of video decoding provided by an embodiment of the present disclosure. An executive entity of the embodiment of the present disclosure may be understood as the decoder illustrated in FIG. 1. As illustrated in FIG. 7, the method includes the following operations S701 and S702.

At S701, a feature bitstream of a current picture is inputted into a decoding network, and first feature information outputted by an i-th middle layer of the decoding network is obtained, where i is a positive integer.

At S702, the first feature information is inputted into a j-th middle layer of a task analysis network, and a task analysis result outputted by the task analysis network is obtained, where j is a positive integer.

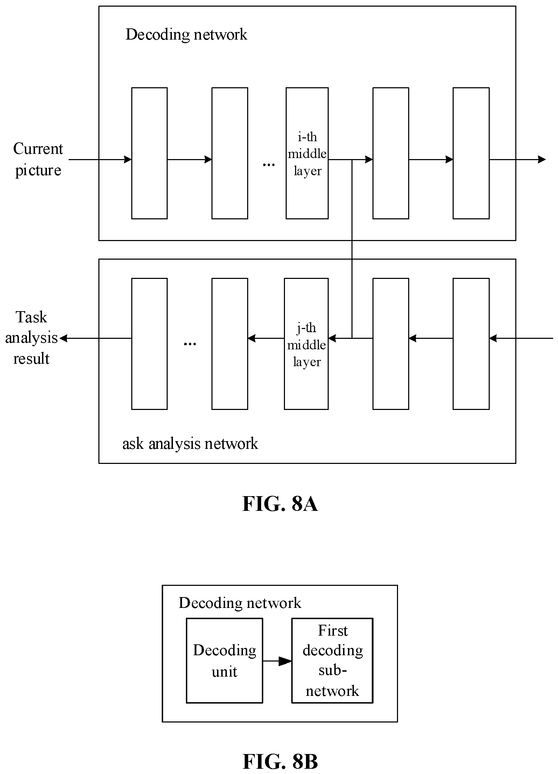

FIG. 8A is a schematic diagram of a network model according to an embodiment of the present disclosure. As illustrated in FIG. 8A, the network model includes a decoding network and a task analysis network, where an output end of the i-th middle layer of the decoding network is connected to an input end of the j-th middle layer of the task analysis network, so that the first feature information outputted by the i-th middle layer of the decoding network may be used as the input of the j-th middle layer of the task analysis network, thereby enabling the task analysis network to perform task analysis according to the feature information inputted by the j-th middle layer.

As illustrated in FIG. 8A, compared with a solution that after decoding feature information of all layers by the decoding network, reconstruction of picture is performed, and the reconstructed picture is inputted into the task analysis network, so that the task analysis network performs task analysis based on the reconstructed picture, in the solution of the embodiment of the present disclosure, only part of the feature information, for example, feature information of the i-th middle layer, needs to be decoded without decoding the feature information of all layers and reconstructing picture, thus saving time and computing resources occupied by task analysis and improving the efficiency of task analysis.

Embodiments of the present disclosure do not limit a specific network structure of the decoding network.

In some embodiments, the decoding network may be a separate neural network. During model training, the decoding network is trained separately.

In some embodiments, the decoding network is a decoding part of an end-to-end encoding and decoding network. During the model training, in the end-to-end encoding and decoding network, a decoding part and an encoding part are end-to-end trained together. The end-to-end encoding and decoding network is also called as an auto-encoder.

In some embodiments, as illustrated in FIG. 8B, the decoding network includes a decoding unit and a first decoding sub-network. The decoding unit is configured for decoding a feature bitstream, and the first decoding sub-network is configured for re-extracting feature information decoded by the decoding unit to reconstruct the picture. In the embodiment, the decoding unit may be understood as an entropy decoding unit, which may perform entropy encoding on the feature bitstream to obtain initial feature information of a current picture, and the decoding unit may be a neural network. The i-th middle layer is a layer other than an output layer in the first decoding sub-network, that is, the i-th middle layer is an input layer or any middle layer of the first decoding sub-network.

Based on FIG. 8B, the above operation S701 includes S701-A and S701-B as follows:

At S701-A, the feature bitstream of the current picture is inputted into a decoding unit, and initial feature information of the current picture outputted by the decoding unit is obtained.

At S701-B, the initial feature information is inputted into a first decoding sub-network, and first feature information outputted by the i-th middle layer of the first decoding sub-network is obtained.

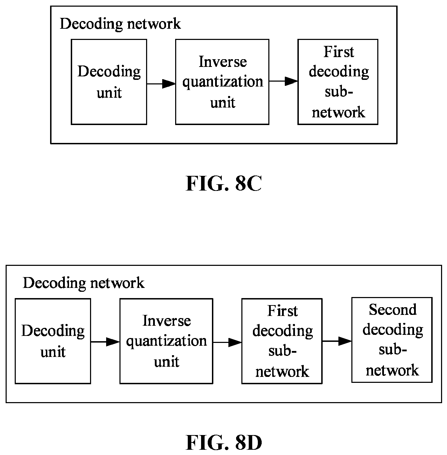

In some embodiments, as illustrated in FIG. 8C, the decoding network may include an inverse quantization unit in addition to the decoding unit and the first decoding sub-network. At this time, the above operation S701-B includes the operations S701-B1 and S701-B2 as follows.

At S701-B1, the initial feature information is inputted into an inverse quantization unit, and inverse-quantized feature information is obtained.

At S701-B2, the inverse-quantized feature information is inputted into the first decoding sub-network, and the first feature information outputted by the i-th middle layer of the first decoding sub-network is obtained.

That is, as illustrated in FIG. 8C, the decoding unit in the decoding network performs decoding on the feature bitstream to obtain the initial feature information, which has been quantized in the encoding network. Therefore, the decoding network needs to perform inverse quantization on the initial feature information. Specifically, the initial feature information is inputted into the inverse quantization unit to perform inverse quantization to obtain inverse-quantized feature information, and then the inverse-quantized feature information is inputted into the first decoding sub-network to obtain the first feature information outputted by the i-th middle layer of the first decoding sub-network.

In some embodiments, when performing encoding on the current picture, the encoding network not only performs encoding on the feature information of the current picture to form a feature bitstream, but also estimates an occurrence probability distribution of decoding points in the current picture, and encodes the probability distribution of the decoding points to form a bitstream of the probability distribution of the decoding points of the current picture (also known as a probability estimation bitstream). In this way, in addition to decoding the feature bitstream, the bitstream of the probability distribution of the decoding points also needs to be decoded.

Based on this, as illustrated in FIG. 8D, the decoding network further includes a second decoding sub-network, and the second decoding sub-network is configured for decoding the bitstream of the probability distribution of the decoding points. At this time, the embodiment of the present disclosure further includes the following operation: the bitstream of the probability distribution of the decoding points of the current picture is inputted into the second decoding sub-network to obtain the probability distribution of the decoding points of the current picture. Correspondingly, the above S701-A includes that: the feature bitstream of the current picture and the probability distribution of the decoding points of the current picture are inputted into the decoding unit to obtain the initial feature information of the current picture outputted by the decoding unit.

Optionally, the second decoding sub-network may be a hyperprior network.

Embodiments of the present disclosure do not limit the specific network structure of the task analysis network.

Optionally, the task analysis network may be a target recognition network, a target detection network, an instance segmentation network, a classification network, etc.

Embodiments of the present disclosure do not limit a specific selection of the i-th middle layer and j-th middle layer.

In some embodiments, the above i-th middle layer may be any middle layer in the decoding network except the input layer and the output layer, and the j-th middle layer may be any middle layer in the decoding network except the input layer and the output layer.

In some embodiments, the i-th middle layer and the j-th middle layer are two middle layers that have a highest feature similarity and/or a smallest model loss in the decoding network and the task analysis network.

For example, the calculation process of feature similarity may be as follows. In the network model construction stage, a picture A is inputted into an encoding network to obtain a bitstream of the picture A, and the bitstream of the picture A is inputted into a decoding network to obtain feature information outputted by each of middle layers of the decoding network and a reconstructed picture of the picture A. The reconstructed picture is inputted into a task analysis network, and feature information inputted by each of middle layers of the task analysis network is obtained. Next, a similarity between the feature information outputted by each middle layer of the decoding network and the feature information inputted by each middle layer of the task analysis network is calculated.

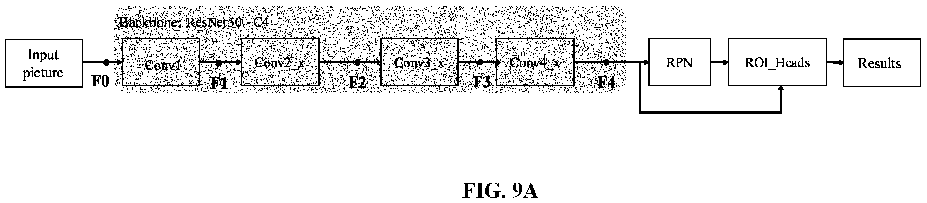

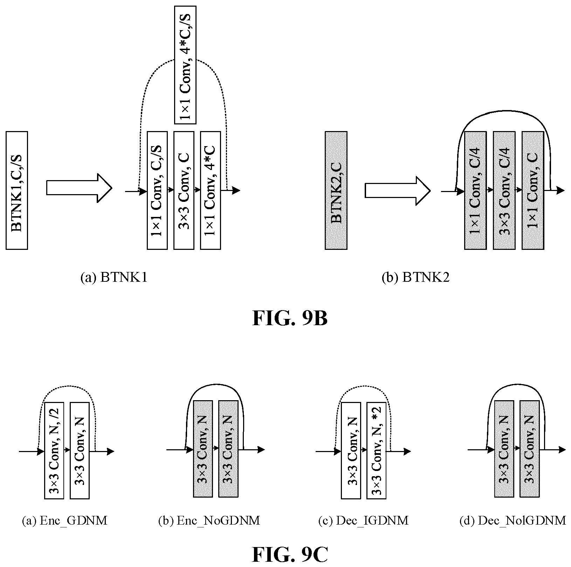

For example, the end-to-end encoding and decoding network is Cheng2020 network, and the task analysis network is a target detection network illustrated in FIG. 9A. The target detection network is also called faster regions with conventional neural network Resnet50Conv4 (Faster RCNN R50C4) network. As illustrated in FIG. 9A, the target detection network includes a backbone Residual Networks 50-C4 (ResNet50-C4), a Region proposal network (RPN), and Region of interest_Heads (ROI-Heads), where the backbone ResNet50-C4 includes four layers, namely Conv1, Conv2_X, Conv3_X and Conv4_X. Conv is the abbreviation of convolution. As an example, Conv1 includes at least one convolution layer, Conv2_X includes a maximum pooling layer, a Bottle Neck (BTINK) 1 and two BTINK2, Conv3_X includes one BTINK1 and three BTINK2, and Conv4_X includes one BTINK1 and five BTINK2. Optionally, the network structures of BTINK1 and BTINK2 are illustrated in FIG. 9B, where BTINK1 includes four convolution layers and BTINK2 includes three convolution layers.

In some embodiments, the Cheng2020 network consists of an encoder generalized divisive normalization module (Enc_GDNM), an encoder no generalized divisive normalization module (Enc_NoGDNM), a decoder inverse generalized divisive normalization module (Dec_IGDNM) and a decoder no inverse generalized divisive normalization module (Dec_NoIGDNM) as illustrated in FIG. 9C.

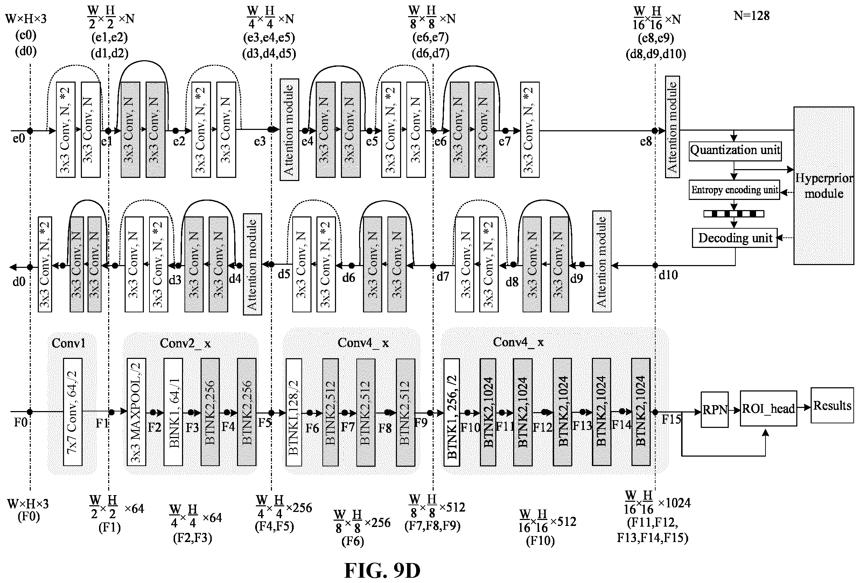

FIG. 9D is a network schematic diagram of an end-to-end encoding and decoding network and a task analysis network, where the end-to-end encoding and decoding network is Cheng2020 network and the task analysis network is Faster RCNN R50C4 network. The end-to-end encoding and decoding network includes an encoding network and a decoding network, where the encoding network includes 9 network layers, including nodes e0 to e9, and the decoding network includes 10 network layers, including nodes d10 to d0. The backbone network of the task analysis network includes 4 network layers, including nodes F0 to F15. As illustrated in FIG. 9D, node e0 is an input node of the encoding network, node d0 is an output node of the decoding network, and node F0 is an input node of the task analysis network. The data corresponding to these three nodes are picture data, such as a picture with size $W \times H \times 3$, where $W \times H$ is a scale of the picture and 3 is the channel number of the picture.

In some embodiments, magnitudes of the convolution kernel of each of layers in the network illustrated in FIG. 9D are illustrated in Table 1:

**EP 4 387 233 A1**

| Name of Layers | Convolution Kernel |
|---|---|
| Cheng2020 End-To-End Encoding and Decoding Network | |
| Enc_GDNM | $[3 \times 3, N]$ <br> $[3 \times 3, N], /2$ |
| Enc_NoGDNM | $[3 \times 3, N] \times 2$ |
| Dec_IGDNM | $[3 \times 3, N]$ <br> $[3 \times 3, N], _* 2$ |
| Dec_NoIGDNM | $[3 \times 3, N] \times 2$ |
| Attention Module | $\begin{bmatrix} 1 \times 1, \dfrac{N}{2} \\ 3 \times 3, \dfrac{N}{2} \\ 1 \times 1, N \end{bmatrix} \times 3$ |
| Conv (e7 to e8) | $[3 \times 3, N], /2$ |
| Conv (d1 to d0) | $[3 \times 3, 3], _* 2$ |
| Faster RCNN R50C4 Target Detection Network | |
| Conv1 | $[7 \times 7, 64] /2$ <br> $maxpool[3 \times 3, 64] /2$ |
| Conv2_x | $\begin{bmatrix} 1 \times 1, 64 \\ 3 \times 3, 64 \\ 1 \times 1, 256 \end{bmatrix} \times 3$ |
| Conv3_x | $\begin{bmatrix} 1 \times 1, 128 \\ 3 \times 3, 128 \\ 1 \times 1, 512 \end{bmatrix} \times 4$ |
| Conv4_x | $\begin{bmatrix} 1 \times 1, 256 \\ 3 \times 3, 256 \\ 1 \times 1, 1024 \end{bmatrix} \times 6$ |

For the convolution kernel "$[3 \times 3, N], /2$" in Table 1, $3 \times 3$ is the size of convolution kernel, N is channel number, /2 is down-sampling, and 2 is a multiple of down-sampling. For the convolution kernel "$[3 \times 3, N] \times 2$" in Table 1, $3 \times 3$ is the size of convolution kernel, N is channel number, and $\times 2$ means that the number of convolution kernels is 2. For the convolution kernel "$[3 \times 3, N], _* 2$" in Table 1, $_* 2$ represents up-sampling, and 2 is a multiple of up-sampling.

It should be noted that the above Table 1 is only an example, and the convolution kernel of each layer in the network illustrated in FIG. 9D includes, but is not limited to, the above as described in Table 1.

Magnitude of the feature information corresponding to each of nodes in the encoding network, the decoding network and task analysis network in FIG. 9D is illustrated in Table 2:

Table 2

| Encoder-end Node | Decoder-end Node | Feature Magnitude of Encoding and Decoding Network | Node of Target Detection Network | Feature Magnitude of Target Detection Network |
|---|---|---|---|---|
| e0 | d0 | W×H×3 | F0 | W×H×3 |

12

(continued)

| Encoder-end Node | Decoder-end Node | Feature Magnitude of Encoding and Decoding Network | Node of Target Detection Network | Feature Magnitude of Target Detection Network |
|---|---|---|---|---|
| e1, e2 | d1, d2 | $\frac{W}{2} \times \frac{H}{2} \times N$ | F1 | $\frac{W}{2} \times \frac{H}{2} \times 64$ |
| e3, e4, e5 | d3, d4, d5 | $\frac{W}{4} \times \frac{H}{4} \times N$ | F5 | $\frac{W}{4} \times \frac{H}{4} \times 256$ |
| e6, e7 | d6, d7 | $\frac{W}{8} \times \frac{H}{8} \times N$ | F9 | $\frac{W}{8} \times \frac{H}{8} \times 512$ |
| e8, e9 | d8, d9, d10 | $\frac{W}{16} \times \frac{W}{16} \times N$ | F15 | $\frac{W}{16} \times \frac{W}{16} \times 1024$ |

Based on the magnitude of feature information of each of middle layers in the decoding network and in the task analysis network illustrated in Table 2 above, the similarity between the feature information outputted by each middle layer of the decoding network and the feature information inputted by each middle layer of the task analysis network is calculated.

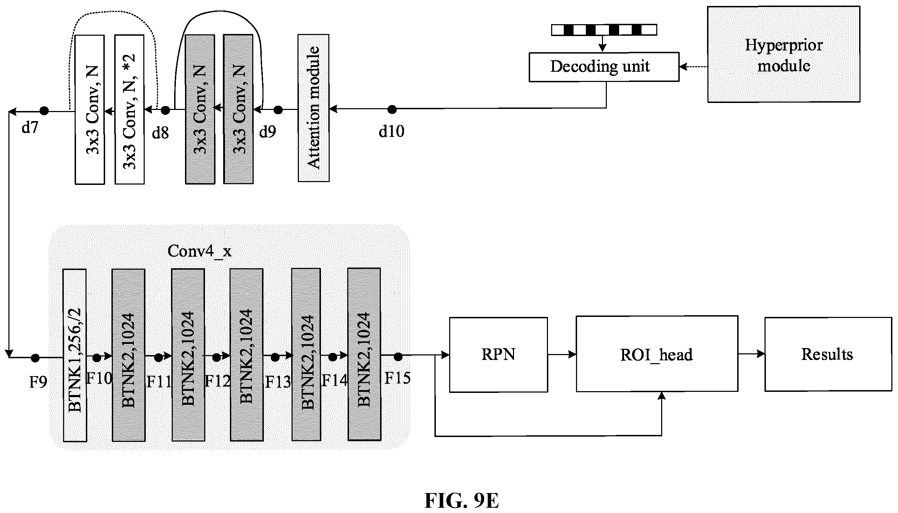

As an example, assuming that a similarity between feature information outputted by a middle layer corresponding to node d7 in the decoding network and feature information inputted by a middle layer corresponding to node F9 of the task analysis network is the highest, as is determined according to the above, then as illustrated in FIG. 9E, the middle layer corresponding to node d7 is taken as the i-th middle layer, the middle layer corresponding to node F9 is taken as the j-th middle layer. Thus, the output end of the middle layer corresponding to node d7 is connected with the input end of the middle layer corresponding to node F9.

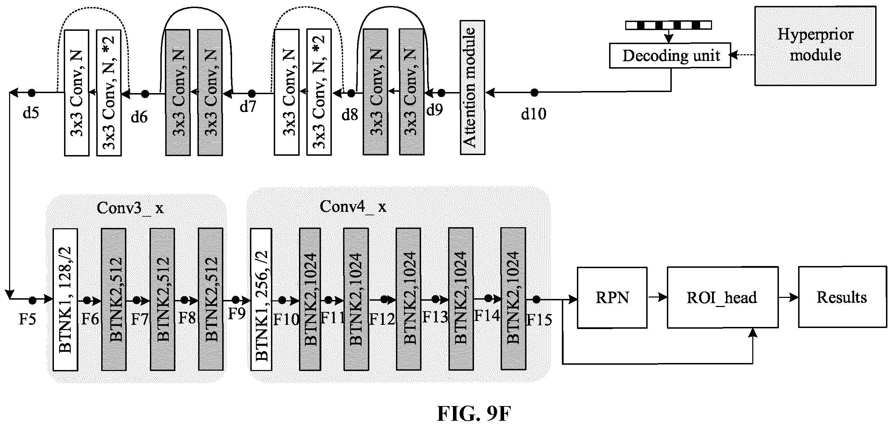

As an example, assuming that a similarity between feature information outputted by a middle layer corresponding to node d5 in the decoding network and feature information inputted by a middle layer corresponding to node F5 of the task analysis network is the highest, as is determined according to the above, then as illustrated in FIG. 9F, the middle layer corresponding to node d5 is taken as the i-th middle layer, the middle layer corresponding to node F5 is taken as the j-th middle layer. Thus, the output end of the middle layer corresponding to node d5 is connected with the input end of the middle layer corresponding to node F5.

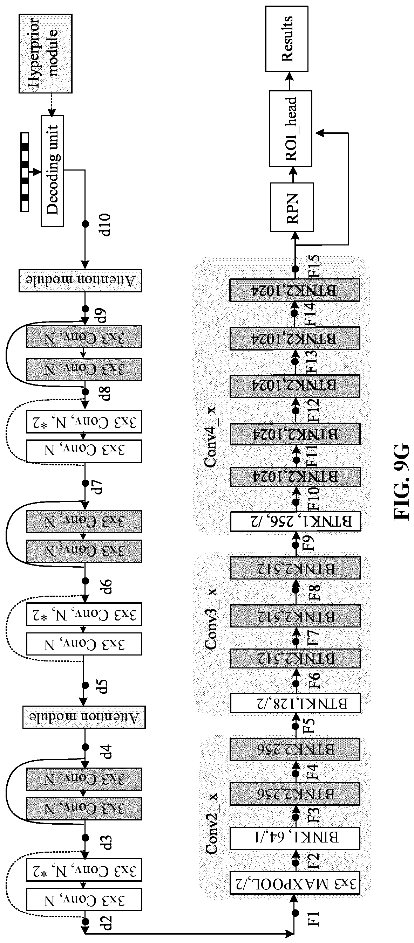

As an example, assuming that a similarity between feature information outputted by a middle layer corresponding to node d2 in the decoding network and feature information inputted by a middle layer corresponding to node F1 of the task analysis network is the highest, as is determined according to the above, then as illustrated in FIG. 9G, the middle layer corresponding to node d2 is taken as the i-th middle layer, the middle layer corresponding to node F1 is taken as the j-th middle layer. Thus, the output end of the middle layer corresponding to node d2 is connected with the input end of the middle layer corresponding to node F1.

Optionally, a feature similarity between the i-th middle layer and the j-th middle layer includes at least one of the following: a similarity between a feature map outputted by the i-th middle layer and a feature map inputted by the j-th middle layer, a similarity between a magnitude of a feature outputted by the i-th middle layer and a magnitude of a feature inputted by the j-th middle layer, or a similarity between a statistical histogram of the feature map outputted by the i-th middle layer and a statistical histogram of the feature map inputted by the j-th middle layer.

The calculation process of the feature similarity is introduced above, and a calculation process of model loss will be introduced below.

Continuing with the model illustrated in FIG. 9D as an example, it is assumed that node d5 is connected with node F5. It should be noted that the connection of nodes here may be understood as a connection of two middle layers, for example, node d5 is an output end of a middle layer in the decoding network, and node F5 is an input end of a middle layer in the task analysis network. A picture B is inputted into the model illustrated in FIG. 9D, and the encoding network performs feature coding on the picture B to obtain a bitstream. The decoding network decodes the bitstream to obtain feature information 1 of the node d5, and the feature information 1 is inputted into the node F5 for task analysis to obtain a classification result 1 that is predicted by the task analysis network based on the feature information 1. A loss 1 between the classification result 1 predicted by the task analysis network and a true value of the classification result corresponding to the picture B is calculated, and a loss of the current model is determined according to the loss 1. Next, the node d5 is connected to the node F9, and the loss of the model when the node d5 is connected to the node F9 is calculated by referring to the above procedure. By analogy, according to the above method, a loss of the model when different nodes in the decoding network are connected with different nodes in the task analysis network may be calculated.

Optionally, two connected middle layers (or two nodes) corresponding to a minimum model loss may be determined as the i-th middle layer and the j-th middle layer.

Optionally, the i-th middle layer and the j-th middle layer may be determined according to the feature similarity and model loss between two middle layers. For example, according to the above calculation method of feature similarity, the feature similarity between each middle layer of the decoding network and each middle layer of the task analysis network is calculated, the model loss when two middle layers are connected is calculated, and two middle layers that have the smallest sum of the feature similarity and the model loss are determined as the i-th middle layer and j-th middle layer.

In some embodiments, in order to reduce the complexity in the determination of the i-th middle layer and the j-th middle layer, the i-th middle layer and the j-th middle layer may be determined by the following examples.

In example 1, a middle layer is selected randomly from the decoding network as the i-th middle layer, and a middle layer in the task analysis network with the highest feature similarity to the i-th middle layer is determined as the j-th middle layer.

In example 2, a middle layer is selected randomly from the decoding network as the i-th middle layer, each middle layer in the task analysis network is connected to the i-th middle layer respectively, and a model loss of each of network models is determined after different middle layers in the task analysis network are connected respectively to the i-th middle layer in the decoding network. A middle layer corresponding to a minimum model loss is determined as the j-th middle layer.

In example 3, a middle layer is selected randomly from the decoding network as the i-th middle layer, a feature similarity between each middle layer in the task analysis network and the i-th middle layer is determined, and a model loss of each of network models is determined after different middle layers in the task analysis network are connected respectively to the i-th middle layer in the decoding network. A sum value of the feature similarity and the model loss corresponding to each middle layer in the task analysis network are determined, and a middle layer corresponding to the minimum sum value is determined as the j-th middle layer.

In example 4, a middle layer is selected randomly from the task analysis network as the j-th middle layer, and a middle layer in the decoding network with the highest feature similarity to the j-th middle layer is determined as the i-th middle layer.

In example 5, a middle layer is selected randomly from the task analysis network as the j-th middle layer, each middle layer in the decoding network is connected to the j-th middle layer respectively, and a model loss of each of network models is determined after different middle layers in the decoding network are connected respectively to the j-th middle layer in the task analysis network. A middle layer corresponding to the minimum model loss is determined as the i-th middle layer.

In example 6, a middle layer is selected randomly from the task analysis network as the j-th middle layer, a feature similarity between each middle layer in the decoding network and the j-th middle layer is determined, and a model loss of each of network models is determined after different middle layers in the decoding network are connected respectively to the j-th middle layer in the task analysis network. A sum value of feature similarity and model loss corresponding to each middle layer in the decoding network are determined, and a middle layer corresponding to the minimum sum value is determined as the i-th middle layer.

It should be noted that the determination process of the i-th middle layer and j-th middle layer above is implemented in the network construction process.

In some embodiments, a conversion process of feature magnitude is also included if the magnitude of the feature information outputted by the i-th middle layer is different from that of the input feature of the j-th middle layer. That is, the above operation S702 includes the following operations S702-A1 and S702-A2.

At S702-A1, the first feature information is inputted into a feature adapter for feature adaptation and second feature information is obtained, where a magnitude of the second feature information is consistent with a magnitude of a preset input of the j-th middle layer.

At S702-A2, the second feature information is inputted into the j-th middle layer, and a task analysis result outputted by the task analysis network is obtained.

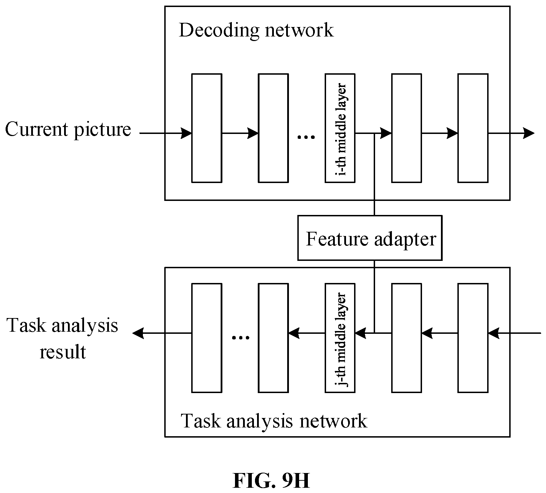

For example, as illustrated in FIG. 9H, the feature adapter is provided between the i-th middle layer of the decoding network and j-th middle layer of the task analysis network.

The magnitude of feature information inputted by the input end of the j-th middle layer may be set in advance.

In some embodiments, the feature adapter may be a neural network unit, including for example a pooling layer or a convolution layer etc. Such feature adapter is referred to as a neural network-based feature adapter.

In some embodiments, the feature adapter may be an arithmetic unit for performing one or more arithmetics to realize the conversion of magnitude of the feature information. Such feature adapter is called a non-neural network-based feature adapter.

The magnitude of feature information includes a size of the feature information and/or a channel number of the feature information.

In some embodiments, the feature adapter is used for adaptation of a channel number if the magnitude of feature information includes a channel number of feature information. That is to say, in the operation S702-A1 above, the operation that the first feature information is inputted into the feature adapter for feature adaptation includes the following situations.

In situation 1, if the channel number of the first feature information is larger than an input channel number of the j-th middle layer, the channel number of the first feature information is reduced to be the same as the input channel number of the j-th middle layer by the feature adapter.

In the situation 1, the manners of reducing the channel number of the first feature information to be the same as the input channel number of the j-th middle layer include, but are not limited to, the following.

In manner 1, when the feature adapter is the non-neural network-based feature adapter, the first feature information is inputted into the feature adapter, so that the feature adapter selects channels with the input channel number of the j-th middle layer from channels of the first feature information by using a Principal Component Analysis (PCA) mode or a random selection mode.

For example, if the channel number of the first feature information is 64 and the input channel number of the j-th middle layer is 32, then 32 channels may be randomly selected from 64 channels of the first feature information and inputted into the j-th middle layer.

For another example, the first feature information is inputted into the feature adapter, so that the feature adapter may select main feature channels whose channel number is the same as the input channel number of the j-th middle layer from the channels of the first feature information by PCA. PCA is a common data analysis method, which is often used for dimension reduction on high-dimensional data and may be used to extract a main feature component of data.

In manner 2, when the feature adapter is the neural network-based feature adapter, the first feature information is inputted into the feature adapter, and the channel number of the first feature information is reduced to be the same as the input channel number of the j-th middle layer by at least one convolution layer in the feature adapter. Optionally, the channel number of the first feature information may be reduced by reducing the number of convolution layers in the feature adapter and/or by reducing the number of convolution kernels.

In situation 2, if the channel number of the first feature information is smaller than the input channel number of the j-th middle layer, the channel number of the first feature information will be increased to be the same as the input channel number of the j-th middle layer by the feature adapter.

In the situation 2, when the feature adapter is the non-neural network-based feature adapter, the manners of increasing the channel number of the first feature information to be the same as the input channel number of the j-th middle layer include, but are not limited to, the following.

In manner 1, when the input channel number of the j-th middle layer is an integer multiple of the channel number of the first feature information, channels of the first feature information are copied by the integer multiple, so that a number of copied channels of the first feature information is the same as the input channel number of the j-th middle layer.

For example, if the channel number of the first feature information is 32 and the input channel number of the j-th middle layer is 64, 32 channels of the first feature information are copied once, and feature information of 64 channels is obtained.

In manner 2, when the input channel number of the j-th middle layer is not an integer multiple of the channel number of the first feature information, channels of the first feature information are copied by N time(s), and M channel(s) is selected from the channels of the first feature information. The M channel(s) is copied, and copied M channel(s) is merged with channels of the first feature information that is copied N time(s), so that a number of merged channels of the first feature information is the same as the input channel number of the j-th middle layer, where N is a quotient of the input channel number of the j-th middle layer divided by the channel number of the first feature information, M is a remainder of the input channel number of the j -th middle layer divided by the channel number of the first feature information, and both N and M are positive integers.

For example, the channel number of the first feature information is 64 and the input channel number of the j-th middle layer is 224, then the quotient of 224 divided by 64 is 3, and the remainder is 32, that is, N is 3, and M is 32. Original channels of the first feature information are copied three times to obtain 192 channels. Then, 32 channels are selected from the original 64 channels of the first feature information, and these 32 channels are copied. The copied 32 channels are merged with the above copied 192 channels to obtain 224 channels. These 224 channels are used as the channels of the first feature information after merging.

Optionally, the manner of selecting 32 channels from 64 original channels of the first feature information may be random selection, PCA selection, or other selection methods, which are not limited in the present disclosure.

The 32 channels and the 192 channels may be merged in such a way that the 32 channels are placed behind the 192 channels, or before the 92 channels, or interpolated in the 192 channels, which is not limited by the present disclosure.

In manner 3, P main feature channel(s) is selected from the channels of the first feature information, the P main feature channel(s) is copied, and copied P main feature channel(s) is merged with the channels of the first feature information, so that a a number of merged channels of the first feature information is the same as the input channel number of the j-th middle layer, where P is a difference between the input channel number of the j-th middle layer and the channel number of the first feature information, and P is a positive integer.

For example, the channel number of the first feature information is 192, the input channel number of the j-th middle layer is 256, and a difference between 256 and 192 is 64, that is, P=64. 64 channels are selected from 192 channels of the first feature information, these 64 channels are copied, and copied 64 channels are merged with the original 192 channels of the first feature information to obtain 256 channels.

Optionally, the manner of selecting 64 channels from 192 original channels of the first feature information may be random selection, PCA selection, or other selection methods, which are not limited in the present disclosure.

In situation 2, when the feature adapter is the neural network-based feature adapter, the first feature information is inputted into the feature adapter, and the channel number of the first feature information is increased to be the same as the input channel number of the j-th middle layer by at least one convolution layer in the feature adapter. Optionally, the channel number of the first feature information may be increased by increasing the number of convolution layers in the feature adapter and/or by increasing the number of convolution kernels.

For example, the magnitude of first feature information is $\frac{W}{8} \times \frac{H}{8} \times N \, (N = 128)$, and the input magnitude of the j-th middle layer is $\frac{W}{4} \times \frac{H}{4} \times 256$. At this time, the magnitude of the first feature information is increased to $\frac{W}{4} \times \frac{H}{4} \times 256$ through at least one convolution layer of the feature adapter.

In some embodiments, the feature adapter is used for adaptation of a size if the magnitude of feature information includes a size of the feature information. That is to say, in the operation S702-A1 above, the operation that the first feature information is inputted into the feature adapter for feature adaptation includes the following situations.

In situation 1, if the size of the first feature information is larger than an input size of the j-th middle layer, the first feature information is down-sampled to have a size that is the same as the input size of the j-th middle layer by the feature adapter.

In the situation 1, the manners that the first feature information is down-sampled to have a size that is the same as the input size of the j-th middle layer by the feature adapter include, but are not limited to, the following.

In manner 1, when the feature adapter is the non-neural network-based feature adapter, the first feature information is down-sampled by the feature adapter so that a size of down-sampled first feature information is the same as the input size of the j-th middle layer.

For example, the magnitude of first feature information is $\frac{W}{8} \times \frac{H}{8} \times N \, (N = 128)$, and the input magnitude of the j-th middle layer is $\frac{W}{4} \times \frac{H}{4} \times 256$. At this time, the channel number is doubled and up-sampled to enable feature dimension matching.

In manner 2, when the feature adapter is the neural network-based feature adapter, the first feature information is down-sampled by at least one pooling layer in the feature adapter so that a size of down-sampled first feature information is the same as the input size of the j-th middle layer.

Optionally, the pooling layer may be a maximum pooling layer, an average pooling layer, and an overlapping pooling layer, etc.

In situation 2, if the size of the first feature information is smaller than the input size of the j-th middle layer, the first feature information is up-sampled to have a size that is the same as the input size of the j-th middle layer by the feature adapter.

In the situation 2, the manners that the first feature information is up-sampled to have a size that is the same as the input size of the j-th middle layer by the feature adapter middle layer include but are not limited to the following.

In manner 1, when the feature adapter is the non-neural network-based feature adapter, the first feature information is up-sampled by the feature adapter so that a size of up-sampled first feature information is the same as the input size of the j-th middle layer.

For example, the magnitude of first feature information is $\frac{W}{8} \times \frac{H}{8} \times N \, (N = 128)$, and the input magnitude

$$\frac{W}{16} \times \frac{H}{16} \times 1024$$

of the j-th middle layer is         . At this time, the up-sampling is used for feature dimension matching.

In manner 2, when the feature adapter is the neural network-based feature adapter, the first feature information is up-sampled by at least one upper pooling layer in the feature adapter so that a size of up-sampled first feature information is the same as the input size of the j-th middle layer.

Optionally, in the manner 2, the feature adapter may be understood as an up-sampling unit, for example, the feature adapter may include a bilinear interpolation layer and/or a deconvolution layer and/or a de-pooling layer and/or an upper pooling layer and the like. The first feature information is up-sampled by the feature adapter so that a size of up-sampled first feature information is the same as the input size of the j-th middle layer.

Continuing with the network model illustrated in FIG. 9D as an example, the input end of the feature adapter may be connected with the output end of the i-th middle layer of the decoding network, and the output end of the feature adapter may be connected with the input end of the j-th middle layer of the task analysis network, so as to convert the magnitude of the first feature information outputted by the i-th middle layer to adapt the input magnitude of j-th middle layer.

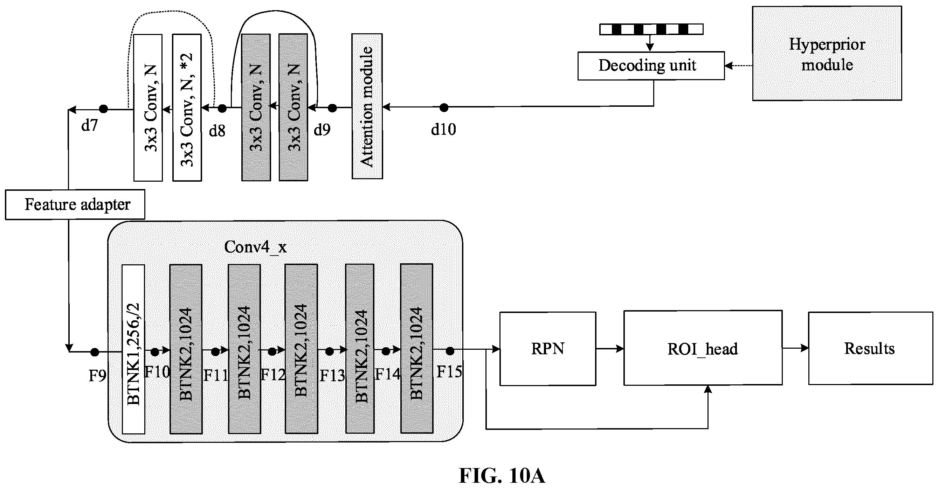

As an example, assuming that node d7 in the decoding network is connected to node F9 in the task analysis network, as illustrated in FIG. 10A, a middle layer corresponding to node d7 is taken as the i-th middle layer, a middle layer corresponding to F9 is taken as the j-th middle layer, and then a feature adapter is connected between node d7 and node F9. The feature adapter is used for converting first feature information outputted by the middle layer corresponding to d7 into second feature information and then inputting the second feature information into the middle layer corresponding to node F9.

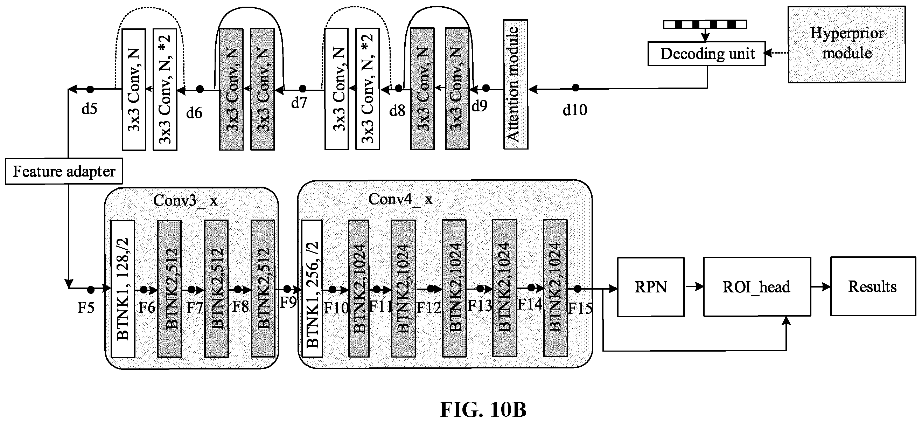

As an example, assuming that node d5 in the decoding network is connected to node F5 in the task analysis network, as illustrated in FIG. 10B, a middle layer corresponding to node d5 is taken as the i-th middle layer, a middle layer corresponding to F5 is taken as the j-th middle layer, and then a feature adapter is connected between node d5 and node F5. The feature adapter is used for converting first feature information outputted by the middle layer corresponding to d5 into second feature information and then inputting the second feature information into the middle layer corresponding to node F5.

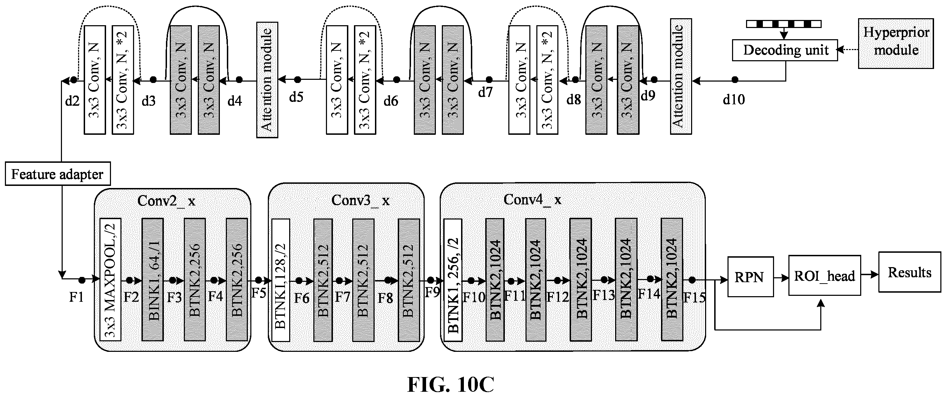

As an example, assuming that node d2 in the decoding network is connected to node F2 in the task analysis network, as illustrated in FIG. 10C, a middle layer corresponding to node d2 is taken as the i-th middle layer, a middle layer corresponding to F1 is taken as j-th middle layer, and then a feature adapter is connected between node d2 and node F1. The feature adapter is used for converting first feature information outputted by the middle layer corresponding to d2 into second feature information and then inputting the second feature information into the middle layer corresponding to node F1.

According to the method of video decoding provided by the embodiments of the present disclosure, a feature bitstream of a current picture is inputted into a decoding network to obtain first feature information outputted by an i-th middle layer of the decoding network, where i is a positive integer; and the first feature information is inputted into a j-th middle layer of a task analysis network and a task analysis result outputted by the task analysis network is obtained, where j is a positive integer. In the present disclosure, the feature information outputted from the middle layer of the decoding network is inputted into the task analysis network, so that the task analysis network performs task analysis based on the feature information outputted by the decoding network, which saves time and computing resources occupied by task analysis, thereby improving the efficiency of task analysis.

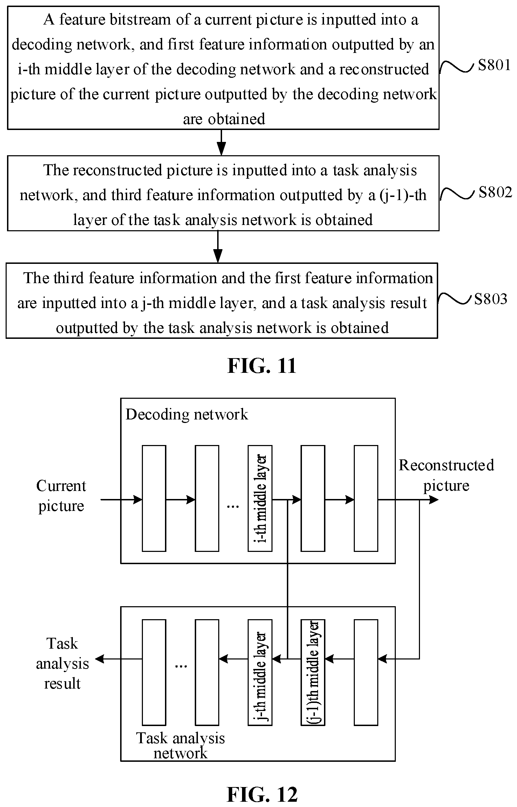

FIG. 11 is a schematic flowchart of a method of video decoding provided by an embodiment of the present disclosure. As illustrated in FIG. 11, the method in the embodiment of the present disclosure includes the following operation S801.

At S801, a feature bitstream of a current picture is inputted into a decoding network, and first feature information outputted by an i-th middle layer of the decoding network and a reconstructed picture of the current picture outputted by the decoding network are obtained.

In the embodiment, not only the first feature information outputted by the i-th middle layer of the decoding network but also the reconstructed picture of the current picture outputted by the decoding network need to be obtained.

That is, in the embodiment, on the one hand, a feature bitstream of a current picture may be inputted into a decoding network to obtain the first feature information outputted by the i-th middle layer of the decoding network, and the first feature information may be inputted into the j-th middle layer of the task analysis network, so that the task analysis network performs task analysis based on the first feature information and outputs a task analysis result. On the other hand, the decoding network continues to perform restoration of subsequent features to achieve reconstruction of the current picture, and outputs the reconstructed picture of the current picture, which can meet the task analysis and a scene of picture display.

In some embodiments, the embodiment of the present disclosure may further include operations S802 and S803 as follows.

At S802, the reconstructed picture is inputted into a task analysis network, and third feature information outputted by a (j-1)-th layer of the task analysis network is obtained.

At S803, the third feature information and the first feature information are inputted into a j-th middle layer, and a task analysis result outputted by the task analysis network is obtained.

FIG. 12 is a schematic structural diagram of a decoding network and a task analysis network according to an embodiment of the present disclosure. As illustrated in FIG. 12, an i-th middle layer of the decoding network is connected with a j-th middle layer of the task analysis network, and the output end of the decoding network is connected with the input end of the task analysis network.

That is, in some embodiment, the first feature information outputted by the i-th middle layer of the decoding network and the reconstructed picture of the current picture finally outputted by the decoding network are obtained. Then, the reconstructed picture of the current picture is inputted into the input end of the task analysis network for feature analysis, and the third feature information outputted by the (j-1)-th middle layer of the task analysis network is obtained. Then, the third feature information outputted from the (j-1)-th middle layer of the task analysis network and the first feature information outputted by the i-th middle layer of the decoding network are inputted into the j-th middle layer of the task analysis network, so that the task analysis network performs task analysis based on the third feature information and the first feature information. Since the third feature information is obtained by the reconstructed picture, the features of the reconstructed picture may be reflected. In this way, the accuracy of task analysis can be improved when performing task analysis based on the first feature information and the third feature information.

In some embodiments, the operation S803 that the third feature information and the first feature information are inputted into the j-th middle layer, and the task analysis result outputted by the task analysis network is obtained includes, but is not limited to, the following implementation manners.

In manner 1, the third feature information and the first feature information are concatenated, and the concatenated feature information is inputted into the j-th middle layer of the task analysis network and the task analysis result outputted by the task analysis network is obtained.

Optionally, the concatenating manner may be cascade of different weights, fusion of different weights or weighted average of different weights, etc.

Optionally, if the magnitude of the third feature information and the magnitude of the first feature information are inconsistent, a feature converter may be adopted to convert the third feature information and the first feature information to have the same magnitude and then cascade them.

Optionally, if the magnitude of the cascaded feature information is inconsistent with the input magnitude of the j-th middle layer, the feature converter may be adopted to convert the magnitude of cascaded feature information into a magnitude consistent with the input magnitude of j-th middle layer, and then input it into the j-th middle layer.

Optionally, the magnitude of the third feature information and/or the first feature information may be converted before the cascade, so that the magnitude of the converted first feature information and/or the third feature information after being cascaded is consistent with the input magnitude of the j-th middle layer.

In manner 2, the third feature information and the first feature information are added, and the added feature information is inputted into the j-th middle layer and the task analysis result outputted by the task analysis network is obtained.

In manner 2, the third feature information and the first feature information are multiplied, and the multiplied feature information is inputted into the j-th middle layer and the task analysis result outputted by the task analysis network is obtained.

In some embodiments, the decoding network and the task analysis network are end-to-end trained together during model training.

In some embodiments, the decoding network and the encoding network are end-to-end trained together during model training.

In some embodiments, the encoding network, the decoding network and the task analysis network are end-to-end trained together during model training.

In some embodiments, if the encoding network, the decoding network and the task analysis network are end-to-end trained together during model training, a target loss of the encoding network, the decoding network and the task analysis network during training is determined based on at least one of: a bit rate of a feature information bitstream outputted by the encoding network, a bit rate of a bitstream of a probability distribution of decoding points outputted by the encoding network, or a loss of the task analysis result of the task analysis network.

For example, the target loss is a sum of the loss of the task analysis result, the bit rate of the feature information bitstream and the bit rate of the bitstream of the probability distribution of the decoding points.

For another example, the target loss is a sum of the following: the bit rate of the feature information bitstream, the bit rate of the bitstream of the probability distribution of the decoding points, and a product of a preset parameter and the loss of the task analysis result.

As an example, the target loss when the encoding network, the decoding network, and the task analysis network are end-to-end trained together may be determined by the following formula (1):

$$loss = R(\hat{y}) + R(\hat{z}) + \lambda \cdot loss_{task} \qquad (1)$$

Herein, R($\hat{y}$) and R($\hat{z}$) are a bit rate of potential feature representation (i.e., a bit rate of a feature bitstream) and a bit rate of side information (i.e., a bit rate of a bitstream of a probability distribution of decoding points) respectively, $\lambda$ represents a preset parameter, also known as a rate-distortion trade-off parameter, and $loss_{task}$ is a task analysis result loss of a task analysis network, such as a loss between a predicted task analysis result of the task analysis network and a true value of the task analysis result.

Optionally, the preset parameter is associated with a network model of at least one of the decoding network or the task analysis network. For example, different preset parameters $\lambda$ correspond to different models, i.e. different total bit rates, the total bit rate being the sum of the bit rate of the feature bitstream and the bit rate of the side information.

According to the method of video decoding provided by the embodiments of the present disclosure, a feature bitstream of a current picture is inputted into a decoding network to obtain first feature information outputted by an i-th middle layer of the decoding network and a reconstructed picture of the current picture outputted by the decoding network. Optionally, the reconstructed picture is further be inputted into a task analysis network to obtain third feature information of the (j-1)-th layer outputted by the task analysis network. The third feature information and the first feature information are inputted into the j-th middle layer and a task analysis result outputted by the task analysis network is obtained. In this way, the accuracy of task analysis is improved.

The method of video decoding of the present disclosure has been described above, and the method of video encoding related to the embodiment of the present disclosure will be described below in conjunction with the embodiment.

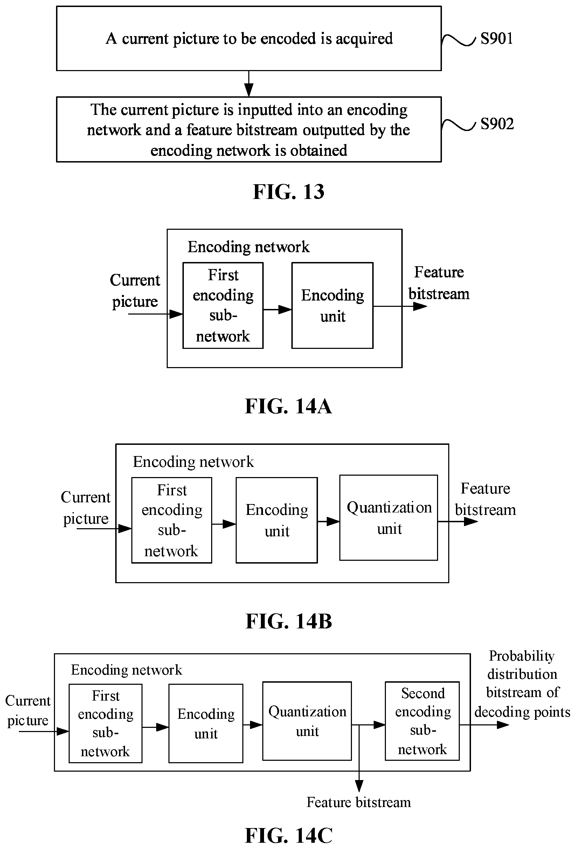

FIG. 13 is a schematic flowchart of a method of video encoding provided by an embodiment of the present disclosure. The execution entity of the embodiment of the present disclosure may be the encoder illustrated in FIG. 1. As illustrated in FIG. 13, the method in the embodiment of the present disclosure includes the following operations S901, S902.

At S901, a current picture to be encoded is acquired.

At S902, the current picture is inputted into an encoding network and a feature bitstream outputted by the encoding network is obtained.

The encoding network and a decoding network are end-to-end trained together during model training, and first feature information outputted by an i-th middle layer of the decoding network is inputted into a j-th middle layer of a task analysis network.

The current picture of the present disclosure may be understood as a picture to be encoded in a video stream or part of the picture. Optionally, the current picture may be understood as a single picture to be encoded or part of the single picture to be encoded.

In some embodiments, as illustrated in FIG. 14A, the encoding network includes a first encoding sub-network and an encoding unit. The operation S902 above includes the following operations.

At S902-A1, the current picture is inputted into the first encoding sub-network, and initial feature information of the current picture is obtained.

At S902-A2, the initial feature information is inputted into the encoding unit, and the feature bitstream outputted by the encoding unit is obtained.

Optionally, the encoding unit may be an entropy encoding unit, which is configured to perform entropy coding on the initial feature information and obtain the feature bitstream of the current picture. Optionally, the encoding unit is a neural network.

In some embodiments, as illustrated in FIG. 14B, the encoding network includes a quantization unit. The operation S902-A2 includes the following operations.

At S902-A21, the initial feature information is inputted into the quantization unit for quantization, and quantized feature information is obtained.

At S902-A22, the quantized feature information is inputted into the encoding unit, and the feature bitstream outputted by the encoding unit is obtained.

Embodiments of the present disclosure are not limited to a quantization step size.

In some embodiments, as illustrated in FIG. 14C, the encoding network further includes a second encoding sub-network. The method of the embodiment of the present disclosure further includes that the initial feature information is inputted into the second encoding sub-network to estimate a probability distribution of decoding points, and a bitstream of the probability distribution of the decoding points of the current picture outputted by the second encoding sub-network is obtained.

Optionally, the second encoding sub-network is a hyperprior network.

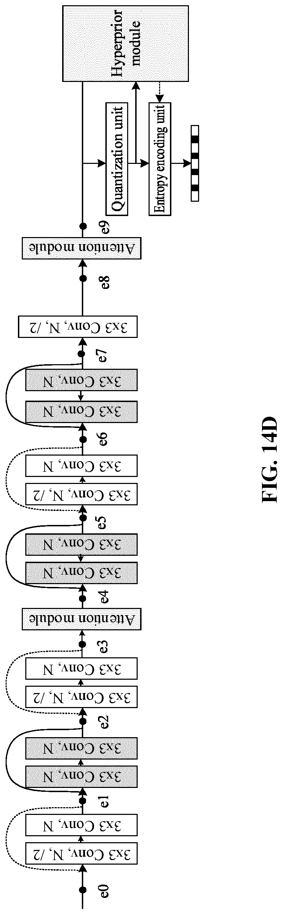

As an example, the encoding network is assumed to be an encoding part of the Cheng2020 encoding and decoding network described above and its network structure is as illustrated in FIG. 14D. The current picture is inputted into the first encoding sub-network, then passing through a convolution layer and an attention module, and feature information extracted from the current picture is obtained. The feature information is quantized by the quantization unit and then entropy encoded by the encoding unit to generate the feature bitstream. In addition, probability distribution estimation is performed on the feature information by the second encoding sub-network to obtain a probability distribution of decoding points, for which quantization and entropy encoding are performed to generate a bitstream of the probability distribution of the decoding points.

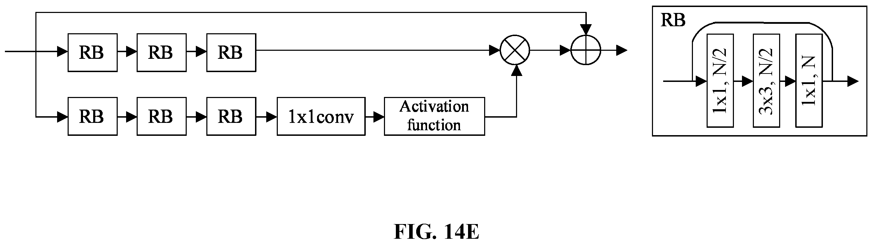

Optionally, the attention module in FIG. 14D is replaced by a simplified attention module, whose structure is as illustrated in FIG. 14E, where RB represents a residual block. The attention module is usually used to improve a performance of picture compression, but the attention module commonly used is very time-consuming in training, so the general attention module is simplified by removing non-local blocks to reduce the complexity of training.

In some embodiments, the encoding network, the decoding network and the task analysis network are end-to-end trained together during model training.

In some embodiments, a target loss of the encoding network, the decoding network and the task analysis network during training is determined based on at least one of: a bit rate of a feature information bitstream outputted by the encoding network, a bit rate of a bitstream of a probability distribution of decoding points outputted by the encoding network, or a loss of a task analysis result of the task analysis network.

Exemplarily, the target loss is a sum of the following: the bit rate of the feature information bitstream, the bit rate of the bitstream of the probability distribution of the decoding points, and a product of a preset parameter and the loss of the task analysis result.

Optionally, the preset parameter is associated with a network model for at least one of the decoding network or the task analysis network.

In some embodiments, the encoding network and decoding network of embodiments of the present disclosure are end-to-end encoding and decoding networks. Several end-to-end encoding and decoding networks that may be involved in embodiments of the present disclosure are described below.

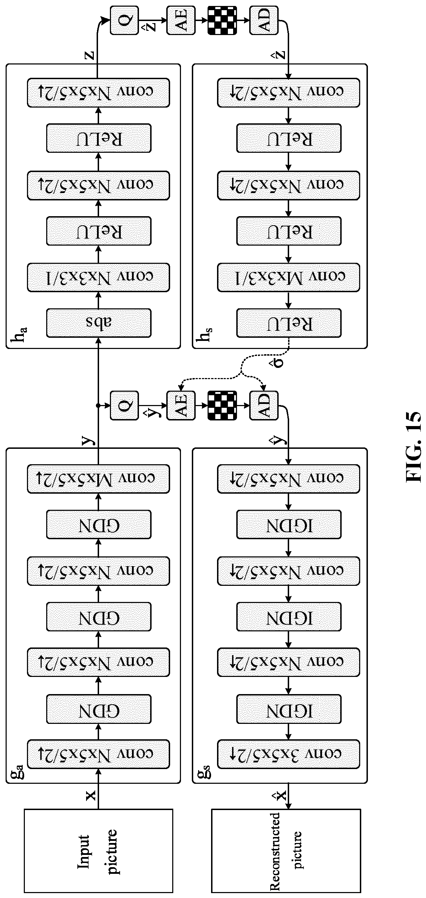

FIG. 15 is a schematic diagram of a general end-to-end encoding and decoding network, where ga may be understood as a first encoding sub-network, ha is a second encoding sub-network, gs is a first decoding sub-network, and hs is a second decoding sub-network. In some embodiments, the first encoding sub-network ga is also referred to as a main encoding network or a main encoder, the first decoding sub-network gs is referred to as a main decoding network or a main decoder, and the second encoding sub-network ha and the second decoding sub-network hs are referred to as hyperprior networks. The flow for feature compression of the general end-to-end encoding and decoding network is as follows. An input original picture passes through a first decoding sub-network $g_a$ and feature information y is obtained, and after the feature information y is quantized by quantizer Q, the quantized feature information $\hat{y}$ is obtained. The second encoding sub-network ha (i.e., hyperprior network) performs modeling on a potential representation in the feature information $y$ by a Gaussian model with mean value of 0 and variance of σ. Because the encoding unit AE and the decoding unit AD both need to obtain the probability distribution of the decoding points in the stage of encoding and decoding, the second encoding sub-network ha (i.e., a hyperprior network) estimates the probability distribution z of the decoding points, and the probability distribution z of the decoding points is quantized as $\hat{z}$, and $\hat{z}$ is compressed to form a bitstream of the probability distribution of the decoding points. Then, the bitstream of the probability distribution of the decoding points is inputted into a decoding end for decoding to obtain a quantized probability distribution $\hat{z}$ of the decoding points, and the probability distribution $\hat{z}$ of the decoding point is inputted into the second decoding sub-network hs (i.e., the hyperprior network) of the decoding end to obtain a modeling distribution of the feature information $\hat{y}$. The encoding unit decodes feature bitstream in combination with the modeling distribution of the feature information $\hat{y}$ to obtain the feature information $\hat{y}$ of the current picture, and the feature information $\hat{y}$ of the current picture is inputted into the first decoding sub-network gs to obtain a reconstructed picture $\hat{x}$. Herein, IGDN is inverse generalized division normalization.

In some embodiments, the end-to-end encoding and decoding network of embodiments of the present disclosure is the network illustrated in FIG. 5C above, and in some embodiments, the end-to-end encoding and decoding network is also referred to as a Lee encoding and decoding network. The Lee encoding and decoding network adopts a transfer learning method to improve the quality of reconstructed pictures by a network. By taking advantage of the transferability across different tasks, Lee encoding and decoding network adds quality enhancement modules on the basis of the framework of basic encoding and decoding network, such as a Grouped Residual Dense Network (GRDN). The compression process of Lee encoding and decoding network is as follows. A picture $x$ is inputted into the first encoding sub-network $g_a$ (i.e. a main encoding network or a transformation analysis network) to obtain an implicit representation y, $y$ is quantized as y, and y is encoded to obtain a feature bitstream. y is inputted into the second encoding sub-network $h_a$, i.e. a hyperprior model, and the hyperprior model is used to further represent the spatial relationship z of y, where z is the probability distribution of the decoding points. Then, z is quantized to obtain $\hat{z}$, and $\hat{z}$ is inputted into an entropy coder (EC) to encode $\hat{z}$ to form a bitstream of a probability distribution of decoding points, which is also called a parametric bitstream optionally. Through the second decoding sub-network hs, a hyperprior parameter $c_i'$ is obtained by reconstructing the parameter bitstream, and model parameters such as global context parameters $c_i''$ and $c_i'''$ are obtained from the feature bitstream. The hyperprior parameter $c_i'$, and the model parameters such as the global context parameters are inputted into a parameter estimator $f$ and are inputted into the decoding unit together with the feature bitstream to obtain y. The first decoding sub-network reconstructs picture $\hat{x}$ based on the feature information y.

In some embodiments, the end-to-end encoding and decoding network of embodiments of the present disclosure is the network illustrated in FIG. 5D above, and in some embodiments, the end-to-end encoding and decoding network is also referred to as a Hu encoding and decoding network. The Hu encoding and decoding network constructs compact and expressive representations successfully at low bit rates to support a set of diverse machine vision tasks including high-level semantic related tasks and middle-level geometric parsing tasks. Hu encoding and decoding network enhances low-level visual features by using high-level semantic maps, and it is verified that this method can improve the code rate, precision, and distortion performance of picture compression effectively. The compression process of Hu encoding and decoding network is as follows. Firstly, a depth feature $h_i$ is extracted from a picture, and the depth feature $h_i$ is transformed into discrete values which are convenient for encoding and probability estimation. Because the feature distribution is unknown, a Gaussian model with a latent variable z is introduced to estimate the feature distribution for convenience of calculation, but it is very difficult to estimate a marginal probability distribution $p_z$. Therefore, a Hyper Analysis Transform module is used to establish a hyperprior v for z, and the hyperprior v is inputted into an arithmetic encoder and decoder. A parametric distribution model $q_v$ is used to estimate approximately a probability distribution $p_v$, and an estimated parameter coefficient sequence $A^l = \left(a_1^l, a_2^l, ..., a_\tau^l\right)$ is decoded and outputted. Then, a codebook $\{C_1, C_2, ..., C_\tau\}$ and the coefficient sequence $A^l$ are used to generate hyperprior $Z$ with spatial information. Finally, the arithmetic encoder and decoder is used to estimate the mean and variance of the hyperprior $Z$, so as to reconstruct features $h_i'$, where the reconstructed features are feature outputs that consider spatial dimension and does not consider spatial dimension, which are used to perform intelligent tasks and analyze statistical features of pictures respectively.

In some embodiments, the end-to-end encoding and decoding network of the embodiments of the present disclosure is the network illustrated in FIG. 5B above, and in some embodiments, the end-to-end encoding and decoding network is also referred to as a Cheng2020 encoding and decoding network. The compression process of the Cheng2020 encoding and decoding network is consistent with that of the general end-to-end encoding and decoding network illustrated in FIG. 15, except that it uses discrete Gaussian mixture likelihood instead of Gaussian model. Reference to the specific compression process may be made to the descriptions for FIG. 15 above, and will not be repeated here.

The end-to-end encoding and decoding network of the embodiment of the present disclosure may be other end-to-end encoding and decoding networks in addition to the end-to-end encoding and decoding networks illustrated in the above figure.

In some embodiments, the encoding network and the decoding end are separate neural networks, not end-to-end neural networks.

It should be understood that FIG. 7 to FIG. 15 is only examples of the present disclosure and should not be construed as limitations to the present disclosure.

Preferred embodiments of the present disclosure have been described in detail with reference to the drawings, but the present disclosure is not limited to the specific details of the above embodiments. Within the scope of the technical conception of the present disclosure, various simple modifications may be made to the technical solution of the present disclosure, and these simple modifications all belong to the scope of protection of the present disclosure. For example, each of the specific technical features described in the above specific embodiments may be combined in any suitable manner without contradiction, and various possible combinations are not further described in the present disclosure in order to avoid unnecessary repetition. For another example, any combination may be made between the various embodiments of the present disclosure so long as they do not depart from the idea of the present disclosure, and they are likewise to be regarded as the disclosure of the present disclosure.

It should be understood that in various method embodiments of the present disclosure, the sizes of the sequence numbers of the above-mentioned processes do not mean the order of execution, and the execution order of each process should be determined by its function and inherent logic, and should not be limited in any way to the implementation process of the embodiments of the present disclosure. In addition, in the present disclosure, the term "and/or" is used to describe an association relationship of associated objects, and represents that there may be three relationships. Specifically, A and/or B may represent the following three situations: i.e., independent existence of A, existence of both A and B and independent existence of B. In addition, the character "/" in the present disclosure generally represents that an "or" relationship is formed between the previous and next associated objects.

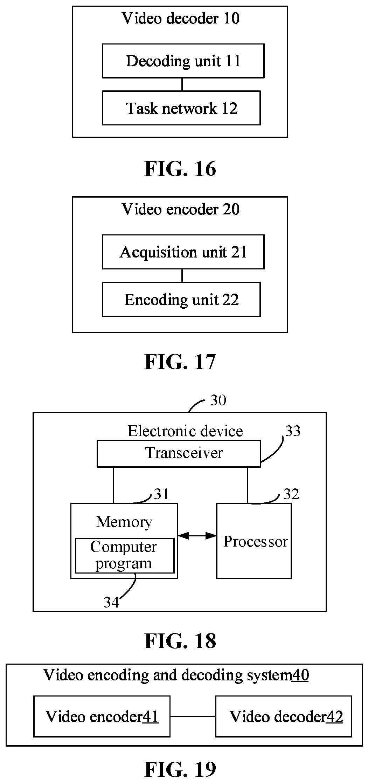

The method embodiments of the present disclosure have been described in detail above with reference to FIG. 7 to FIG. 15, and the apparatus embodiments of the present disclosure will be described in detail below with reference to FIG. 16 to FIG. 18.

FIG. 16 is a schematic block diagram of a video decoder provided by an embodiment of the present disclosure.

As illustrated in FIG. 16, the video decoder 10 includes a decoding unit 11 and a task unit 12.

The decoding unit 11 is configured to input a feature bitstream of a current picture into a decoding network and obtain first feature information outputted by an i-th middle layer of the decoding network, where i is a positive integer.

The task unit 12 is configured to input the first feature information into a j-th middle layer of a task analysis network and obtain a task analysis result outputted by the task analysis network, where j is a positive integer.

In some embodiments, the task unit 12 is specifically configured to: input the first feature information into a feature adapter for feature adaptation and obtain second feature information, where a magnitude of the second feature information is consistent with a magnitude of a preset input of the j-th middle layer; and input the second feature information into the j-th middle layer and obtain the task analysis result outputted by the task analysis network.

Optionally, a magnitude of feature information includes a size of the feature information and/or a channel number of the feature information.

In some embodiments, when the magnitude of the feature information includes the channel number of the feature information, the task unit 12 is specifically configured to: reduce the channel number of the first feature information to be the same as an input channel number of the j-th middle layer by the feature adapter when a channel number of the first feature information is larger than the input channel number of the j-th middle layer; and increase the channel number of the first feature information to be the same as the input channel number of the j-th middle layer by the feature adapter when the channel number of the first feature information is less than the input channel number of the j-th middle layer.

In some embodiments, the task unit 12 is specifically configured to: when the feature adapter is the non-neural network-based feature adapter, input the first feature information into the feature adapter, so that the feature adapter selects channels with the input channel number of the j-th middle layer from channels of the first feature information by using a Principal Component Analysis (PCA) mode or a random selection mode; and when the feature adapter is the neural network-based feature adapter, input the first feature information into the feature adapter, and reduce the channel number of the first feature information to be the same as the input channel number of the j-th middle layer by at least one convolution layer in the feature adapter.

In some embodiments, when the feature adapter is the non-neural network-based feature adapter, the task unit 12 is specifically configured to: copy channels of the first feature information by an integer multiple when the input channel number of the j-th middle layer is the integer multiple of the channel number of the first feature information, so that a number of copied channels of the first feature information is the same as the input channel number of the j-th middle layer; or

when the input channel number of the j-th middle layer is not an integer multiple of the channel number of the first feature information, copy the channels of the first feature information by N time(s), select M channel(s) from the channels of the first feature information, copy the M channel(s), and merge copied M channel(s) with channels of the first feature information that is copied N time(s), so that a number of merged channels of the first feature information is the same as the input channel number of the j-th middle layer, where N is a quotient of the input channel number of the j-th middle layer divided by the channel number of the first feature information, M is a remainder of the input channel number of the j-th middle layer divided by the channel number of the first feature information, and both N and M are positive integers; or

select P main feature channel(s) from the channels of the first feature information, copy the P main feature channel(s) and merge copied P main feature channel(s) with the channels of the first feature information, so that a number of merged channels of the first feature information is the same as the input channel number of the j-th middle layer, where P is a difference between the input channel number of the j-th middle layer and the channel number of the first feature information, and P is a positive integer.

In some embodiments, when the feature adapter is the neural network-based feature adapter, the task unit 12 is specifically configured to input the first feature information into the feature adapter, and increase the channel number of the first feature information to be the same as the input channel number of the j-th middle layer by at least one convolution layer in the feature adapter.

In some embodiments, the task unit 12 is specifically configured to input the first feature information into the feature adapter, so that the feature adapter selects channels with the input channel number of the j-th middle layer from channels of the first feature information by using a Principal Component Analysis (PCA) mode.

In some embodiments, the task unit 12 is specifically configured to: when the feature adapter is the non-neural network-based feature adapter, down-sample the first feature information by the feature adapter so that a size of down-sampled first feature information is the same as an input size of the j-th middle layer; and when the feature adapter is the neural network-based feature adapter, down-sample the first feature information by at least one pooling layer in the feature adapter so that a size of down-sampled first feature information is the same as the input size of the j-th middle layer.

Optionally, the pooling layer is any one of a maximum pooling layer, an average pooling layer, or an overlapping pooling layer.

In some embodiments, the task unit 12 is specifically configured to: when the feature adapter is the non-neural network-based feature adapter, up-sample the first feature information by the feature adapter so that a size of up-sampled first feature information is the same as an input size of the j-th middle layer; and when the feature adapter is the neural network-based feature adapter, up-sample the first feature information by at least one upper pooling layer in the feature adapter so that a size of up-sampled first feature information is the same as the input size of the j-th middle layer.

In some embodiments, when the magnitude of the feature information includes the size of the feature information, the task unit 12 is specifically configured to: down-sample the first feature information to have a size that is the same as the input size of the j-th middle layer by the feature adapter when a size of the first feature information is larger than the input size of the j-th middle layer; and up-sample the first feature information to have a size that is the same as the input size of the j-th middle layer by the feature adapter when the size of the first feature information is smaller than the input size of the j-th middle layer.

In some embodiments, the decoding unit 11 is further configured to input the feature bitstream of the current picture into the decoding network and obtain a reconstructed picture of the current picture outputted by the decoding network.

In some embodiments, the task unit 12 is specifically configured to: input the reconstructed picture into the task analysis network and obtain third feature information outputted by a (j-1)-th layer of the task analysis network; and input the third feature information and the first feature information into the j-th middle layer of the task analysis network and obtain the task analysis result outputted by the task analysis network.

In some embodiments, the task unit 12 is specifically configured to concatenate the third feature information and the first feature information, and input concatenated feature information into the j-th middle layer and obtain the task analysis result outputted by the task analysis network.

In some embodiments, the decoding network includes a decoding unit and a first decoding sub-network. The decoding unit 11 is specifically configured to: input the feature bitstream of the current picture into the decoding unit and obtain initial feature information of the current picture outputted by the decoding unit; and input the initial feature information into the first decoding sub-network and obtain the first feature information outputted by an i-th middle layer of the first decoding sub-network.

In some embodiments, the decoding network further includes an inverse quantization unit. The decoding unit 11 is specifically configured to: input the initial feature information into the inverse quantization unit and obtain inverse-quantized feature information; and input the inverse-quantized feature information into the first decoding sub-network and obtain the first feature information outputted by the i-th middle layer of the first decoding sub-network.

In some embodiments, the decoding network further includes a second decoding sub-network. The decoding unit 11 is specifically configured to: input a bitstream of a probability distribution of decoding points of the current picture into the second decoding sub-network and obtain the probability distribution of the decoding points of the current picture; and input the feature bitstream of the current picture and the probability distribution of the decoding points of the current picture into the decoding unit, and obtain the initial feature information of the current picture outputted by the decoding unit.

Optionally, the decoding network and the task analysis network are end-to-end trained together during model training.

Optionally, the decoding network and an encoding network are end-to-end trained together during model training.

Optionally, an encoding network, the decoding network and the task analysis network are end-to-end trained together during model training.

In some embodiments, a target loss of the encoding network, the decoding network and the task analysis network during training is determined based on at least one of: a bit rate of a feature information bitstream outputted by the encoding network, a bit rate of a bitstream of a probability distribution of decoding points, or a loss of the task analysis result of the task analysis network.

Exemplarily, the target loss is a sum of the following: the bit rate of the feature information bitstream, the bit rate of the bitstream of the probability distribution of the decoding points, and a product of a preset parameter and the loss of the task analysis result.

Optionally, the preset parameter is associated with a network model for at least one of the decoding network or the task analysis network.

In some embodiments, the i-th middle layer and the j-th middle layer are two middle layers of the decoding network and the task analysis network that have a highest feature similarity and/or a smallest model loss.

In some embodiments, a feature similarity between the i-th middle layer and the j-th middle layer includes at least one of the following: a similarity between a feature map outputted by the i-th middle layer and a feature map inputted by the j-th middle layer, a similarity between a magnitude of a feature outputted by the i-th middle layer and a magnitude of a feature inputted by the j-th middle layer, or a similarity between a statistical histogram of the feature map outputted by the i-th middle layer and a statistical histogram of the feature map inputted by the j-th middle layer.

It should be understood that the apparatus embodiments and the method embodiments may correspond to each other, and similar descriptions thereof may refer to the method embodiments and are not repeated here for the sake of brevity. Specifically, the video decoder 10 illustrated in FIG. 16 may correspond to a corresponding entity executing the decoding method of the embodiments of the present disclosure, and the foregoing and other operations and/or functions of the respective units in the video decoder 10 are respectively to implement the corresponding flow in the respective methods such as the decoding method, which is not repeated here for the sake of brevity.

FIG. 17 is a schematic block diagram of a video encoder provided by an embodiment of the present disclosure.

As illustrated in FIG. 17, the video encoder 20 includes an acquisition unit 21 and an encoding unit 22.

The acquisition unit 21 is configured to acquire a current picture to be encoded.

The encoding unit 22 is configured to input the current picture into an encoding network and obtain a feature bitstream outputted by the encoding network. Herein, the encoding network and a decoding network are end-to-end trained together during model training, and first feature information outputted by an i-th middle layer of the decoding network is inputted into a j-th middle layer of a task analysis network.

In some embodiments, the encoding network includes a first encoding sub-network and an encoding unit. The encoding unit 22 is specifically configured to: input the current picture into the first encoding sub-network and obtain initial feature information of the current picture; and input the initial feature information into the encoding unit and obtain the feature bitstream outputted by the encoding unit.

In some embodiments, the encoding network further includes a quantization unit. The encoding unit 22 is specifically configured to: input the initial feature information into the quantization unit for quantization and obtain quantized feature information; and input the quantized feature information into the encoding unit and obtain the feature bitstream outputted by the encoding unit.

In some embodiments, the encoding network further includes a second encoding sub-network. The encoding unit 22 is specifically configured to input the initial feature information into the second encoding sub-network to estimate a probability distribution of decoding points, and obtain a bitstream of the probability distribution of the decoding points of the current picture outputted by the second encoding sub-network.

Optionally, the encoding network, a decoding network and a task analysis network are end-to-end trained together during model training.

In some embodiments, a target loss of the encoding network, the decoding network and the task analysis network during training is determined based on at least one of: a bit rate of a feature information bitstream outputted by the encoding network, a bit rate of a bitstream of a probability distribution of decoding points outputted by the encoding network, or a loss of a task analysis result of the task analysis network.

Exemplarily, the target loss is a sum of the following: the bit rate of the feature information bitstream, the bit rate of the bitstream of the probability distribution of the decoding points, and a product of a preset parameter and the loss of the task analysis result.

Optionally, the preset parameter is associated with a network model for at least one of the decoding network or the task analysis network.

It should be understood that the apparatus embodiments and the method embodiments may correspond to each other, and similar descriptions thereof may refer to the method embodiments and will not be repeated here for the sake of brevity. Specifically, the video encoder 20 illustrated in FIG. 17 may correspond to a corresponding entity executing the encoding method of the embodiments of the present disclosure, and the foregoing and other operations and/or functions of the respective units in the video encoder 20 are respectively to implement the corresponding flow in the respective methods such as the encoding method, and are not repeated here for the sake of brevity.

The apparatus and system of the embodiments of the present disclosure are described above from the perspective of functional units with reference to the accompanying drawings. It should be understood that the functional units may be implemented in hardware form, by instructions in software form, or by a combination of hardware and software units. In particular, each operation of the method embodiments in the embodiments of the present disclosure may be completed by the integrated logic circuit of the hardware in the processor and/or the instruction in the form of software, and the operations of the method disclosed in combination with the embodiments of the present disclosure may be directly embodied as the execution of the hardware decoding processor or the combined execution of the hardware and software units in the decoding processor. Optionally, the software units may be located in a random access memory, a flash memory, a read-only memory, a programmable read-only memory or an electrically erasable programmable memory, a register and other mature storage medium in the art. The storage medium is located in the memory, and the processor reads information in the memory to complete the operations of the aforementioned method embodiments in conjunction with its hardware.

FIG. 18 is a schematic block diagram of an electronic device provided by an embodiment of the present disclosure.

As illustrated in FIG. 18, the electronic device 30 may be a video encoder or a video decoder as described in the embodiments of the present disclosure, and the electronic device 30 may include a processor 33 and a memory 32.

The memory 33 is configured to store a computer program 34 and transmit the computer program 34 to the processor 32. In other words, the processor 32 may call and execute the computer program 34 from the memory 33 to implement the method in the embodiments of the present disclosure.

For example, the processor 32 may be configured to perform the operations in the method described above in accordance with instructions in the computer program 34.

In some embodiments of the present disclosure, the processor 32 may include, but is not limited to:

a general purpose processor, a digital signal processor (DSP), an application specific integrated circuit (ASIC), a field programmable gate array (FPGA) or other programmable logic devices, discrete gates or transistor logic devices, or discrete hardware components and the like.

In some embodiments of the present disclosure, the memory 33 may include, but is not limited to:

a volatile memory and/or a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM).

In some embodiments of the present disclosure, the computer program 34 may be divided into one or more units stored in the memory 33 and executed by the processor 32 to complete the method provided herein. The one or more units may be a series of computer program instruction segments capable of performing specific functions, and the instruction segments describe the execution process of the computer program 34 in the electronic device 30.

As illustrated in FIG. 18, the electronic device 30 may further include a transceiver 33.

The transceiver 33 may be connected to the processor 32 or the memory 33.

The processor 32 may control the transceiver 33 to communicate with other devices, and in particular may send information or data to other devices, or receive information or data sent by other devices. The transceiver 33 may include a transmitter and a receiver. The transceiver 33 may further include antennas. The number of antennas may be one or more.

It should be understood that various components in the electronic device 30 are connected by a bus system. The bus system includes a power bus, a control bus and a status signal bus in addition to a data bus.

FIG. 19 is a schematic block diagram of a video encoding and decoding system provided by an embodiment of the present disclosure.

As illustrated in FIG. 19, the video encoding and decoding system 40 may include a video encoder 41 and a video decoder 42. The video encoder 41 is configured to implement the method of video encoding according to the embodiments of the present disclosure, and the video decoder 42 is configured to implement the method of video decoding according to the embodiments of the present disclosure.

There is also provided a bitstream in the present disclosure, and the bitstream is generated according to the above encoding method.

There is also provided a computer storage medium in the present disclosure, having stored thereon a computer program that, when executed by a computer, causes the computer to execute the method of the method embodiments described above. Optionally, There is also provided a computer program product including instructions that, when executed by a computer, cause the computer to execute the method of the method embodiments described above.

When implemented in software, it may be implemented in whole or in part in the form of a computer program product. The computer program product includes one or more computer instructions. When the computer program instructions are loaded and executed on a computer, the flow or function described in accordance with embodiments of the present disclosure is generated in whole or in part. The computer may be a general purpose computer, a special purpose computer, a computer network, or other programmable device. The computer instructions may be stored in a computer-readable storage medium, or from one computer-readable storage medium to another. For example, the computer instructions may be transmitted from a web site, computer, server, or data center to another web site, computer, server, or data center via wired (e.g. coaxial cable, optical fiber, digital subscriber line (DSL)) or wireless (e.g. infrared, wireless, microwave, etc.). The computer-readable storage medium may be any usable medium accessible to a computer or a data storage device containing one or more usable medium integration, such as a server, data center, etc. The usable medium may be a magnetic medium (e.g. floppy disk, hard disk, magnetic tape), an optical medium (e.g. digital video disc (DVD)), or a semiconductor medium (e.g. solid state disk (SSD)), etc.

Those of ordinary skill in the art may realize that the various example units and algorithm steps described in connection with the embodiments disclosed herein may be implemented in electronic hardware or in a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

In several embodiments provided herein, it should be understood that the disclosed systems, apparatuses and methods may be implemented in other manners. For example, the above-described embodiments of the apparatus are only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure. For example, each functional unit in each embodiment of the present disclosure may be integrated in one processing unit, each unit may exist physically alone, or two or more units may be integrated in one unit.

The above is only the specific implementation of the present disclosure, but the scope of protection of the present disclosure is not limited thereto. Any person skilled in the art may easily think of changes or substitutions within the technical scope disclosed in the present disclosure, which should be covered within the protection scope of the present disclosure. Therefore, the scope of protection of the application shall be subject to the scope of protection of the claim.

**Claims**

1.  A method of video decoding, comprising:

    inputting a feature bitstream of a current picture into a decoding network and obtaining first feature information outputted by an i-th middle layer of the decoding network, wherein i is a positive integer; and
    inputting the first feature information into a j-th middle layer of a task analysis network and obtaining a task analysis result outputted by the task analysis network, wherein j is a positive integer.

2.  The method of claim 1, wherein inputting the first feature information into the j-th middle layer of the task analysis network and obtaining the task analysis result outputted by the task analysis network comprises:

    inputting the first feature information into a feature adapter for feature adaptation and obtaining second feature information, wherein a magnitude of the second feature information is consistent with a magnitude of a preset input of the j-th middle layer; and
    inputting the second feature information into the j-th middle layer and obtaining the task analysis result outputted by the task analysis network.

3.  The method of claim 2, wherein a magnitude of feature information comprises a size of the feature information and/or a channel number of the feature information.

4.  The method of claim 3, wherein the feature adapter comprises a neural network-based feature adapter and a non-neural network-based feature adapter.

5.  The method of claim 4, wherein when the magnitude of the feature information comprises the channel number of the feature information, inputting the first feature information into the feature adapter for feature adaptation comprises:

    when a channel number of the first feature information is larger than an input channel number of the j-th middle layer, reducing the channel number of the first feature information to be the same as the input channel number of the j-th middle layer by the feature adapter;
    when the channel number of the first feature information is less than the input channel number of the j-th middle layer, increasing the channel number of the first feature information to be the same as the input channel number of the j-th middle layer by the feature adapter.

6. The method of claim 5, wherein reducing the channel number of the first feature information to be the same as the input channel number of the j-th middle layer by the feature adapter comprises:

   when the feature adapter is the non-neural network-based feature adapter, inputting the first feature information into the feature adapter, so that the feature adapter selects channels with the input channel number of the j-th middle layer from channels of the first feature information by using a Principal Component Analysis (PCA) mode or a random selection mode;
   when the feature adapter is the neural network-based feature adapter, inputting the first feature information into the feature adapter, and reducing the channel number of the first feature information to be the same as the input channel number of the j-th middle layer by at least one convolution layer in the feature adapter.

7. The method of claim 5, wherein when the feature adapter is the non-neural network-based feature adapter, the when the channel number of the first feature information is less than the input channel number of the j-th middle layer, increasing the channel number of the first feature information to be the same as the input channel number of the j-th middle layer by the feature adapter comprises:

   when the input channel number of the j-th middle layer is an integer multiple of the channel number of the first feature information, copying channels of the first feature information by the integer multiple so that a number of copied channels the first feature information is the same as the input channel number of the j-th middle layer; or
   when the input channel number of the j-th middle layer is not an integer multiple of the channel number of the first feature information, copying the channels of the first feature information by N time(s), selecting M channel(s) from the channels of the first feature information, copying the M channel(s), and merging copied M channel(s) with channels of the first feature information that is copied N time(s) so that a number of merged channels of the first feature information is the same as the input channel number of the j-th middle layer, wherein N is a quotient of the input channel number of the j -th middle layer divided by the channel number of the first feature information, M is a remainder of the input channel number of the j-th middle layer divided by the channel number of the first feature information, and both N and M are positive integers; or
   selecting P main feature channel(s) from the channels of the first feature information, copying the P main feature channel(s) and merging copied P main feature channel(s) with the channels of the first feature information, so that a number of merged channels of the first feature information is the same as the input channel number of the j-th middle layer, wherein P is a difference between the input channel number of the j-th middle layer and the channel number of the first feature information, and P is a positive integer.

8. The method of claim 5, wherein when the feature adapter is the neural network-based feature adapter, the when the channel number of the first feature information is less than the input channel number of the j-th middle layer, increasing the channel number of the first feature information to be the same as the input channel number of the j-th middle layer by the feature adapter comprises:
   inputting the first feature information into the feature adapter, and increasing the channel number of the first feature information to be the same as the input channel number of the j-th middle layer by at least one convolution layer in the feature adapter.

9. The method of claim 4, wherein when the magnitude of the feature information comprises the size of the feature information, inputting the first feature information into the feature adapter for feature adaptation comprises:

   when a size of the first feature information is larger than an input size of the j-th middle layer, down-sampling the first feature information to have a size that is the same as the input size of the j-th middle layer by the feature adapter;
   when the size of the first feature information is smaller than the input size of the j-th middle layer, up-sampling the first feature information to have a size that is the same as the input size of the j-th middle layer by the feature adapter.

10. The method of claim 9, wherein when the size of the first feature information is larger than the input size of the j-th middle layer, down-sampling the first feature information to have the size that is the same as the input size of the j-th middle layer by the feature adapter comprises:

   when the feature adapter is the non-neural network-based feature adapter, down-sampling the first feature information by the feature adapter so that a size of down-sampled first feature information is the same as the input size of the j-th middle layer;

when the feature adapter is the neural network-based feature adapter, down-sampling the first feature information by at least one pooling layer in the feature adapter so that a size of down-sampled first feature information is the same as the input size of the j-th middle layer.

11. The method of claim 10, wherein the pooling layer is any one of a maximum pooling layer, an average pooling layer, or an overlapping pooling layer.

12. The method of claim 9, wherein when the size of the first feature information is smaller than the input size of the j-th middle layer, up-sampling the first feature information to have the size that is the same as the input size of the j-th middle layer by the feature adapter comprises:

when the feature adapter is the non-neural network-based feature adapter, up-sampling the first feature information by the feature adapter so that a size of up-sampled first feature information is the same as the input size of the j-th middle layer;
when the feature adapter is the neural network-based feature adapter, up-sampling the first feature information by at least one upper pooling layer in the feature adapter so that a size of up-sampled first feature information is the same as the input size of the j-th middle layer.

13. The method of any one of claims 1-12, further comprising:
inputting the feature bitstream of the current picture into the decoding network and obtaining a reconstructed picture of the current picture outputted by the decoding network.

14. The method of claim 13, further comprising:

inputting the reconstructed picture into the task analysis network and obtaining third feature information outputted by a (j-1)-th layer of the task analysis network;
wherein inputting the first feature information into the j-th middle layer of the task analysis network and obtaining the task analysis result outputted by the task analysis network comprises:
inputting the third feature information and the first feature information into the j-th middle layer and obtaining the task analysis result outputted by the task analysis network.

15. The method of claim 14, wherein inputting the third feature information and the first feature information into the j-th middle layer and obtaining the task analysis result outputted by the task analysis network comprises:
concatenating the third feature information and the first feature information, and inputting concatenated feature information into the j-th middle layer and obtaining the task analysis result outputted by the task analysis network.

16. The method of any one of claims 1-12, wherein the decoding network comprises a decoding unit and a first decoding sub-network, and inputting the feature bitstream of the current picture into the decoding network and obtaining the first feature information outputted by the i-th middle layer of the decoding network comprises:

inputting the feature bitstream of the current picture into the decoding unit and obtaining initial feature information of the current picture outputted by the decoding unit; and
inputting the initial feature information into the first decoding sub-network and obtaining the first feature information outputted by an i-th middle layer of the first decoding sub-network.

17. The method of claim 16, wherein the decoding network further comprises an inverse quantization unit, and inputting the initial feature information into the first decoding sub-network and obtaining the first feature information outputted by the i-th middle layer of the first decoding sub-network comprises:

inputting the initial feature information into the inverse quantization unit and obtaining inverse-quantized feature information; and
inputting the inverse-quantized feature information into the first decoding sub-network and obtaining the first feature information outputted by the i-th middle layer of the first decoding sub-network.

18. The method of claim 16, wherein the decoding network further comprises a second decoding sub-network, and the method further comprises:

inputting a bitstream of a probability distribution of decoding points of the current picture into the second decoding sub-network and obtaining the probability distribution of the decoding point of the current picture;
wherein inputting the feature bitstream of the current picture into the decoding unit and obtaining the initial feature information of the current picture outputted by the decoding unit comprises:
inputting the feature bitstream of the current picture and the probability distribution of the decoding points of the current picture into the decoding unit, and obtaining the initial feature information of the current picture outputted by the decoding unit.

19. The method of any one of claims 1-12, wherein the decoding network and the task analysis network are end-to-end trained together during model training.

20. The method of any one of claims 1-12, wherein the decoding network and an encoding network are end-to-end trained together during model training.

21. The method of any one of claims 1-12, wherein an encoding network, the decoding network and the task analysis network are end-to-end trained together during model training.

22. The method of claim 21, wherein a target loss of the encoding network, the decoding network and the task analysis network during training is determined based on at least one of: a bit rate of a feature information bitstream outputted by the encoding network, a bit rate of a bitstream of a probability distribution of decoding points outputted by the encoding network, or a loss of the task analysis result of the task analysis network.

23. The method of claim 22, wherein the target loss is a sum of the following: the bit rate of the feature information bitstream, the bit rate of the bitstream of the probability distribution of the decoding points, and a product of a preset parameter and the loss of the task analysis result.

24. The method of claim 23, wherein the preset parameter is associated with a network model for at least one of the decoding network or the task analysis network.

25. The method of any one of claims 1-12, wherein the i-th middle layer and the j-th middle layer are two middle layers that have a highest feature similarity and/or a smallest model loss in the decoding network and the task analysis network.

26. The method of claim 25, wherein a feature similarity between the i-th middle layer and the j-th middle layer comprises at least one of the following: a similarity between a feature map outputted by the i-th middle layer and a feature map inputted by the j-th middle layer, a similarity between a magnitude of a feature outputted by the i-th middle layer and a magnitude of a feature inputted by the j-th middle layer, or a similarity between a statistical histogram of the feature map outputted by the i-th middle layer and a statistical histogram of the feature map inputted by the j-th middle layer.

27. A method of video encoding, comprising:

acquiring a current picture to be encoded; and
inputting the current picture into an encoding network and obtaining a feature bitstream outputted by the encoding network;
wherein the encoding network and a decoding network are end-to-end trained together during model training, and first feature information outputted by an i-th middle layer of the decoding network is inputted into a j-th middle layer of a task analysis network.

28. The method of claim 27, wherein the encoding network comprises a first encoding sub-network and an encoding unit, and inputting the current picture into the encoding network and obtaining the feature bitstream outputted by the encoding network comprises:

inputting the current picture into the first encoding sub-network and obtaining initial feature information of the current picture; and
inputting the initial feature information into the encoding unit and obtaining the feature bitstream outputted by the encoding unit.

29. The method of claim 28, wherein the encoding network further comprises a quantization unit, and inputting the initial feature information into the encoding unit and obtaining the feature bitstream outputted by the encoding unit comprises:

inputting the initial feature information into the quantization unit for quantization and obtaining quantized feature information; and

inputting the quantized feature information into the encoding unit and obtaining the feature bitstream outputted by the encoding unit.

30. The method of claim 28, wherein the encoding network further comprises a second encoding sub-network, and the method further comprises:
inputting the initial feature information into the second encoding sub-network to estimate a probability distribution of decoding points, and obtaining a bitstream of the probability distribution of the decoding points of the current picture outputted by the second encoding sub-network.

31. The method of any one of claims 27-30, wherein the encoding network, the decoding network and the task analysis network are end-to-end trained together during model training.

32. The method of claim 31, wherein a target loss of the encoding network, the decoding network and the task analysis network during training is determined based on at least one of: a bit rate of a feature information bitstream outputted by the encoding network, a bit rate of a bitstream of a probability distribution of decoding points outputted by the encoding network, or a loss of the task analysis result of the task analysis network.

33. The method of claim 32, wherein the target loss is a sum of the following: the bit rate of the feature information bitstream, the bit rate of the bitstream of the probability distribution of the decoding points, and a product of a preset parameter and the loss of the task analysis result.

34. The method of claim 33, wherein the preset parameter is associated with a network model for at least one of the decoding network or the task analysis network.

35. A video decoder, comprising:

a decoding unit, configured to input a feature bitstream of a current picture into a decoding network and obtain first feature information outputted by an i-th middle layer of the decoding network, wherein i is a positive integer; and

a task network, configured to input the first feature information into a j-th middle layer of a task analysis network and obtain a task analysis result outputted by the task analysis network, wherein j is a positive integer.

36. A video encoder, comprising:

an acquisition unit, configured to acquire a current picture to be encoded; and

a decoding unit, configured to input the current picture into an encoding network and obtain a feature bitstream outputted by the encoding network; wherein the encoding network and a decoding network are end-to-end trained together during model training, and first feature information outputted by an i-th middle layer of the decoding network is inputted into a j-th middle layer of a task analysis network.

37. A video decoder, comprising a processor and a memory;

wherein the memory is configured to store a computer program; and
the processor is configured to call and execute the computer program stored in the memory to implement the method of any one of claims 1 to 26.

38. A video encoder, comprising a processor and a memory;

wherein the memory is configured to store a computer program; and
the processor is configured to call and execute the computer program stored in the memory to implement the method of any one of claims 27 to 34.

39. A video encoding and decoding system, comprising:

a video decoder of claim 37; and
a video encoder of claim 38.

40. A computer-readable storage medium, for storing a computer program,
wherein the computer program causes a computer to implement the method of any one of claims 1 to 26 or the method of any one of claims 27 to 34.

41. A bitstream, wherein the bitstream is generated according to the method of any one of claims 27 to 34.

**Encoding device110**

| Video source 111 | → | Video encoder 112 | → | Output interface 113 |

130

**Decoding device 120**

| Display device 123 | ← | Video decoder 122 | ← | Input interface 121 |

**FIG. 1**

Picture/video → Picture/video encoding → Encoder (based on neural network) → Picture/video decoding → Decoder (based on neural network) → Task analysis → Intelligent task network

**FIG. 2**

**Video encoder 200**

Inputting a video stream

220 Residual block

Quantized transformation coefficient

Prediction block → Transform/quantization unit 230

**Prediction unit 210**
- Inter prediction unit 211
- Intra estimation unit 212

250 Reconstructed block

Inverse transform/quantization unit 240

In-loop filtering unit 260

Decoded picture buffer 270

Prediction block

Entropy encoding unit 280 → Bitstream

**FIG. 3**

Video decoder 300

Prediction unit 320

Bitstream → Header information decoding unit 310 → Intra prediction unit 321

Inter estimation unit 322

Inverse quantization and inverse transform unit 330 → ⊕ 340 → In-loop filtering 350 → Decoded picture buffer 360 → Video data

**FIG. 4**

Probability
estimation
bitstream

| E1 | E2 | | | | D2 | | D1 |

Original
picture → Sub-network of
a neural network → Sub-network of
a neural network → Quantization
and entropy
encoding → Feature
bitstream → Entropy
decoding → Sub-network of
a neural network → Sub-network of
a neural network → Reconstructed
picture

**FIG. 5A**

FIG. 5B

**FIG. 5C**

**FIG. 5D**

**FIG. 6A**

**FIG. 6B**

**FIG. 6C**

A feature bitstream of a current picture is inputted into a decoding network, and first feature information outputted by an i-th middle layer of the decoding network is obtained

S701

The first feature information is inputted into a j-th middle layer of a task analysis network, and a task analysis result outputted by the task analysis network is obtained

S702

**FIG. 7**

Decoding network

Current
picture →

i-th
middle
layer

...

Task
analysis ←
result

j-th
middle
layer

...

ask analysis network

**FIG. 8A**

Decoding network

Decoding
unit →

First
decoding
sub-
network

**FIG. 8B**

Decoding network

| Decoding unit | → | Inverse quantization unit | → | First decoding sub-network |

**FIG. 8C**

Decoding network

| Decoding unit | → | Inverse quantization unit | → | First decoding sub-network | → | Second decoding sub-network |

**FIG. 8D**

FIG. 9A

(a) BTNK1             (b) BTNK2

**FIG. 9B**

(a) Enc_GDNM    (b) Enc_NoGDNM    (c) Dec_IGDNM    (d) Dec_NoIGDNM

**FIG. 9C**

FIG. 9D

**FIG. 9E**

3x3 Conv, N

3x3 Conv, N, *2

d5

d6

3x3 Conv, N

3x3 Conv, N

d7

3x3 Conv, N

3x3 Conv, N, *2

d8

3x3 Conv, N

3x3 Conv, N

d9

Attention module

d10

Decoding unit

Hyperprior module

Conv3_x

BTNK1, 128,/2

BTNK2,512

BTNK2,512

BTNK2,512

F5 F6 F7 F8 F9

Conv4_x

BTNK1, 256, /2

BTNK2,1024

BTNK2,1024

BTNK2,1024

BTNK2,1024

BTNK2,1024

F10 F11 F12 F13 F14 F15

RPN

ROI_head

Results

**FIG. 9F**

FIG. 9G

**FIG. 9H**

Hyperprior module

Decoding unit

d10

Attention module

d9

3x3 Conv, N

3x3 Conv, N

d8

3x3 Conv, N, *2

3x3 Conv, N

d7

Feature adapter

Conv4_x

BTNK1,256,/2 — F9

BTNK2,1024 — F10

BTNK2,1024 — F11

BTNK2,1024 — F12

BTNK2,1024 — F13

BTNK2,1024 — F14

F15

RPN

ROI_head

Results

**FIG. 10A**

FIG. 10B

**FIG. 10C**

A feature bitstream of a current picture is inputted into a decoding network, and first feature information outputted by an i-th middle layer of the decoding network and a reconstructed picture of the current picture outputted by the decoding network are obtained ∿ S801

The reconstructed picture is inputted into a task analysis network, and third feature information outputted by a (j-1)-th layer of the task analysis network is obtained ∿ S802

The third feature information and the first feature information are inputted into a j-th middle layer, and a task analysis result outputted by the task analysis network is obtained ∿ S803

**FIG. 11**

**FIG. 12**

```
┌─────────────────────────────────────────────────┐
│   A current picture to be encoded is acquired    │ ⌇ S901
└─────────────────────────────────────────────────┘
                        │
                        ▼
┌─────────────────────────────────────────────────┐
│  The current picture is inputted into an encoding │
│  network and a feature bitstream outputted by the │ ⌇ S902
│         encoding network is obtained              │
└─────────────────────────────────────────────────┘
```

## FIG. 13

## FIG. 14A

## FIG. 14B

## FIG. 14C

**FIG. 14D**

**FIG. 14E**

**FIG. 15**

Video decoder 10

Decoding unit 11

Task network 12

**FIG. 16**

Video encoder 20

Acquisition unit 21

Encoding unit 22

**FIG. 17**

30

Electronic device

33

Transceiver

31

32

Memory

Computer
program

Processor

34

**FIG. 18**

Video encoding and decoding system40

Video encoder41 — Video decoder42

**FIG. 19**

**EP 4 387 233 A1**

<div align="center">

**INTERNATIONAL SEARCH REPORT**

</div>

| | International application No. |
|---|---|
| | **PCT/CN2021/122473** |

| A. | CLASSIFICATION OF SUBJECT MATTER |
|---|---|

H04N 19/85(2014.01)i; G06T 7/00(2017.01)i; G06N 3/08(2006.01)i

According to International Patent Classification (IPC) or to both national classification and IPC

| B. | FIELDS SEARCHED |
|---|---|

Minimum documentation searched (classification system followed by classification symbols)

H04N; G06T; G06N

Documentation searched other than minimum documentation to the extent that such documents are included in the fields searched

Electronic data base consulted during the international search (name of data base and, where practicable, search terms used)

WPI, EPODOC, CNPAT, CNKI, JVET: 编码, 解码, 分层, 中间层, 多层, 可伸缩, 任务, 分析, 分割, 目标, 检测, 识别, 分类, 特征, 通道, encode, code, decode, layer, hierarchy, interlayer, multilayer, scalability, flexible, task, analyze, segmentation, target, objective, detect, recognition, classify, characteristic, channel

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021050007 A1 (NANYANG TECHNOLOGICAL UNIVERSITY et al.) 18 March 2021 (2021-03-18) <br> description, paragraphs 0024-0046 and 0082, and figure 11 | 1-41 |
| A | CN 110334738 A (DALIAN UNIVERSITY OF TECHNOLOGY) 15 October 2019 (2019-10-15) <br> entire document | 1-41 |
| A | CN 106529589 A (WENZHOU UNIVERSITY) 22 March 2017 (2017-03-22) <br> entire document | 1-41 |
| A | CN 112037225 A (JIANGNAN UNIVERSITY) 04 December 2020 (2020-12-04) <br> entire document | 1-41 |
| A | CN 112257858 A (HUAWEI TECHNOLOGIES CO., LTD.) 22 January 2021 (2021-01-22) <br> entire document | 1-41 |
| A | CN 112587129 A (SHANGHAI YINGPU TECHNOLOGY CO., LTD.) 02 April 2021 (2021-04-02) <br> entire document | 1-41 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 June 2022** | **27 June 2022** |

| Name and mailing address of the ISA/CN | Authorized officer |
|---|---|
| China National Intellectual Property Administration (ISA/CN) <br> No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/122473**

**C.    DOCUMENTS CONSIDERED TO BE RELEVANT**

| Category* | Citation of document, with indication, where appropriate, of the relevant passages | Relevant to claim No. |
|---|---|---|
| A | EP 3859606 A1 (FUJITSU LIMITED et al.) 04 August 2021 (2021-08-04) entire document | 1-41 |

Form PCT/ISA/210 (second sheet) (January 2015)

**INTERNATIONAL SEARCH REPORT**
Information on patent family members

International application No.

**PCT/CN2021/122473**

| Patent document cited in search report | | | Publication date (day/month/year) | Patent family member(s) | | | Publication date (day/month/year) |
|---|---|---|---|---|---|---|---|
| WO | 2021050007 | A1 | 18 March 2021 | None | | | |
| CN | 110334738 | A | 15 October 2019 | None | | | |
| CN | 106529589 | A | 22 March 2017 | None | | | |
| CN | 112037225 | A | 04 December 2020 | None | | | |
| CN | 112257858 | A | 22 January 2021 | WO | 2022057776 | A1 | 24 March 2022 |
| CN | 112587129 | A | 02 April 2021 | None | | | |
| EP | 3859606 | A1 | 04 August 2021 | US | 2021241460 | A1 | 05 August 2021 |
| | | | | JP | 2021120814 | A | 19 August 2021 |

Form PCT/ISA/210 (patent family annex) (January 2015)